# EUROPÄISCHE PATENTANMELDUNG

(11) **EP 3 611 009 A1**
(43) Veröffentlichungstag der Anmeldung: **19.02.2020**
(21) Anmeldenummer: 19190371.5
(22) Anmeldetag: 06.08.2019
(51) Int. Cl.: B29C 64/379, B33Y 40/00, B29C 64/35

(54) **AUSPACKVORRICHTUNG FÜR ADDITIV GEFERTIGTE FERTIGUNGSPRODUKTE**

(30) Priorität: 16.08.2018 DE 102018119993
(71) Anmelder: EOS GmbH Electro Optical Systems, 82152 Krailling (DE)
(72) Erfinder: Vodermair, Thomas, 83253 Rimsting (DE)
(74) Vertreter: Beckord & Niedlich Patentanwälte PartG mbB

(57) **Zusammenfassung**

Es werden eine Auspackvorrichtung (1) für einen Baubehälter (100) einer Vorrichtung zur additiven Fertigung von Fertigungsprodukten, welcher Baubehälter (100) eine umlaufende Baubehälterwand (101) und eine darin höhenverschiebbar gelagerte Aufbauplattform (102) aufweist, sowie ein Verfahren zur Steuerung einer solchen Auspackvorrichtung (1) beschrieben. Die Auspackvorrichtung (1) umfasst zumindest eine Aufnahmekammer (2) zur Aufnahme eines Baubehälters (100), eine oberhalb der Aufnahmekammer (2) befindliche Auspackkammer (3), eine Trennwand (5) zwischen der Aufnahmekammer (2) und der Auspackkammer (3) mit einer Übergabeöffnung (6), eine in der Aufnahmekammer (2) befindliche Baubehälter-Hubeinrichtung (30), welche ausgebildet ist, um den Baubehälter (100) von einer Baubehälter-Aufnahmeposition (P1) in eine Baubehälter-Auspackposition (P2) zu verfahren, eine in der Aufnahmekammer (2) befindliche Aufbauplattform-Hubeinrichtung (40), welche ausgebildet ist, um eine Aufbauplattform (102) von einer Aufbauplattform-Ausgangsposition (P3) in zumindest eine Aufbauplattform-Auspackposition (P4) zu verfahren und eine Steuereinrichtung (50), um zumindest ein Steuersignal (AHS, AHS', ASS, ASS', BHS, BHS', BSS, BSS') an die Baubehälter-Hubeinrichtung (30) und an die Aufbauplattform-Hubeinrichtung (40) auszugeben.

## Beschreibung

Die Erfindung betrifft eine Auspackvorrichtung für einen Baubehälter einer Vorrichtung (im Folgenden auch Fertigungsvorrichtung genannt) zur additiven Fertigung von Fertigungsprodukten, wobei die Auspackvorrichtung eine Aufnahmekammer zur Aufnahme eines Baubehälters umfasst, eine oberhalb der Aufnahmekammer befindliche Auspackkammer und eine Trennwand zwischen der Aufnahmekammer und der Auspackkammer mit einer Übergabeöffnung. Darüber hinaus betrifft die Erfindung ein Verfahren zur Steuerung einer solchen Auspackvorrichtung.

Bei der Herstellung von Prototypen und inzwischen auch in der Serienfertigung werden additive Fertigungsprozesse immer relevanter. Im Allgemeinen sind unter "additiven Fertigungsprozessen" solche Fertigungsprozesse zu verstehen, bei denen, in der Regel auf Basis von digitalen 3D-Konstruktionsdaten, beispielsweise durch das selektive Verschmelzen von Material, ein Fertigungsprodukt bzw. Bauteil aufgebaut wird. Der Aufbau erfolgt dabei meist, aber nicht zwingend, schichtweise. Als ein Synonym für die additive Fertigung wird häufig auch der Begriff "3D-Druck" verwendet, die Herstellung von Modellen, Mustern und Prototypen mit additiven Fertigungsprozessen wird oft als "Rapid Prototyping" und die Herstellung von Werkzeugen als "Rapid Tooling" bezeichnet. Wie eingangs erwähnt, ist ein Kernpunkt bei vielen additiven Fertigungsprozessen die selektive Verfestigung des Aufbaumaterials, wobei diese Verfestigung bei vielen Fertigungsprozessen mit Hilfe einer Bestrahlung mit Strahlungsenergie, z. B. elektromagnetischer Strahlung, insbesondere Licht- und/oder Wärmestrahlung, aber ggf. auch mit Teilchenstrahlung, wie z. B. Elektronenstrahlung, erfolgen kann. Beispiele für mit einer Bestrahlung arbeitende Verfahren sind das "selektive Lasersintern" oder "selektive Laserschmelzen". Dabei werden wiederholt dünne Schichten eines meist pulverförmigen Aufbaumaterials bzw. Baumaterials übereinander aufgebracht und in jeder Schicht wird das Aufbaumaterial durch räumlich begrenztes Bestrahlen der Stellen, die in der jeweiligen Schicht dem Querschnitt des herzustellenden Fertigungsprodukts entsprechen, selektiv verfestigt, indem die Pulverkörner des Aufbaumaterials mit Hilfe der durch die Strahlung an dieser Stelle lokal eingebrachten Energie teilweise oder vollständig aufgeschmolzen werden. Nach einer Abkühlung sind diese Pulverkörner dann miteinander in einem Festkörper verbunden.

Die Fertigung des Bauteils erfolgt dabei in der Regel in einem Baubehälter, der eine umlaufende Baubehälterwand und eine darin vertikal bewegliche Aufbauplattform aufweist. Diese Aufbauplattform schließt den Baubehälter nach unten ab und bildet damit dessen Boden. Ein zu fertigendes Bauteil kann auf der Aufbauplattform selber aufgebaut werden, die dann die Bauunterlage bildet. Dazu wird der Baubehälter zunächst mit nach oben gefahrener Aufbauplattform in der Fertigungsvorrichtung positioniert und die Aufbauplattform während einer Fertigung eines Bauteils schrittweise nach unten verfahren, um so die Schichten eines Baumaterials übereinander aufzubringen und an den gewünschten Positionen das Baumaterial lokal zu verfestigen.

Nach Fertigung des Bauteils befindet sich nicht nur das Bauteil, sondern auch das nicht verfestigte Baumaterial bzw. Pulver im Baubehälter. Nach Abschluss des Herstellungsprozesses wird deshalb der Baubehälter meist aus der Fertigungsvorrichtung zunächst mittels eines Handhabungsgeräts, wie beispielsweise einem Gabelstapler oder dergleichen, in eine Auspackstation transportiert, in der das Bauteil vom umliegenden nicht verfestigten Baumaterial befreit wird.

Gerade wenn es sich bei dem Aufbaumaterial um Metall handelt, kann der Baubehälter mitsamt seinem Inhalt ein enormes Gewicht aufweisen, aber auch bei kunststoffhaltigem Aufbaumaterial kommen, beispielsweise bei einem Baubehälter mit den Abmessungen 64 x 47 x 46 cm (Länge x Breite x Höhe), durchaus Gewichte des gefüllten Baubehälters von etwa 200 kg zum Tragen. Daher stellen die Aufnahme und der Transport eines Baubehälters in eine Position, in der die gefertigten Bauteile ausgepackt werden können, eine besondere Herausforderung dar.

In einer üblichen Methode um ein in einem Baubehälter befindliches Bauteil auszupacken, wird der Baubehälter in einer Aufnahmekammer der Auspackstation auf Schienen aufgeschoben, wobei die Schienen seitlich unter einen Kragen am oberen Rand des Kragens greifen. Die Schienen können von einer Aufnahmeposition, in der der Baubehälter aufgenommen werden kann, in eine Auspackposition bewegt werden, in der der Baubehälter nach oben gegen eine Öffnung zu einer Auspackkammer gedrückt wird. Diese Bewegung erfolgt mittels eines Schwenkmechanismus, der mit einem Bügel verbunden ist. Zur Aufnahme eines Baubehälters ist der Bügel dabei nach oben geschwenkt, wobei die Schienen schräg nach unten ausgerichtet sind. Um den Baubehälter in dieser Vorrichtung zu positionieren, wird der Baubehälter zunächst mit dem Handhabungsgerät, welches zum Transport genutzt wurde, angehoben, um ihn dann schräg auf der Schiene des Bügels mit einem äußeren Rand aufzuschieben, was jedoch umständlich sein kann. Daraufhin wird der Bügel heruntergeklappt, die Schienen richten sich dabei parallel horizontal aus und der Baubehälter wird von den Schienen nach oben gedrückt und in der Auspackposition eingeklemmt. Das Herauf- und Herunterklappen des Bügels erfolgt manuell. Aufgrund des sehr hohen Gewichts des Baubehälters und seines Inhalts kann das manuelle Anheben des Baubehälters mit dem Bügel jedoch sehr beschwerlich sein.

Nachdem der Baubehälter durch den Bügel eingeklemmt ist, kann mit einem Mechanismus die Aufbauplattform des Baubehälters nach oben verfahren werden, um die beförderten Bauteile auspacken zu können. Dieser Mechanismus weist einen nach oben verfahrbaren Steg auf, welcher von unten gegen die Aufbauplattform drückt. Damit dieser Steg gegen die Aufbauplattform drücken kann, ist ein entsprechender Schlitz erforderlich, der sich vom unteren Rand nach oben in die Baubehälterwand des Baubehälters herein erstreckt und der die Fertigungskosten für die Baubehälter erhöht.

Es ist Aufgabe der vorliegenden Erfindung, eine Auspackvorrichtung der eingangs genannten Art, welche die Handhabbarkeit beim Auspacken eines Bauteils aus einem Baubehälter erleichtert, und ein verbessertes Verfahren zur Steuerung einer solchen Auspackvorrichtung zur Verfügung zu stellen.

Diese Aufgabe wird durch eine Auspackvorrichtung gemäß der Merkmalskombination nach Patentanspruch 1, wobei die Unteransprüche mindestens zweckmäßige Ausgestaltungen und Weiterbildungen darstellen, sowie durch ein Verfahren zur Steuerung einer Auspackvorrichtung gemäß Patentanspruch 15 gelöst.

Die erfindungsgemäße Auspackvorrichtung für einen Baubehälter einer Vorrichtung zur additiven Fertigung von Fertigungsprodukten bzw. Bauteilen, umfasst zumindest eine Aufnahmekammer, die wie zuvor beschrieben, zur Aufnahme eines Baubehälters dient, in dem sich z. B. ein oder mehrere additiv gefertigte Bauteile und das nicht verfestigte Baumaterial befinden, die aus dem Baubehälter ausgepackt werden sollen. Der in der Aufnahmekammer aufgenommene "zu entleerende" Baubehälter weist dabei auch hier eine umlaufende Baubehälterwand (im Folgenden auch kurz als "Rahmen" bezeichnet) und eine darin höhenverschiebbar gelagerte Aufbauplattform auf.

Oberhalb der Aufnahmekammer befindet sich, ebenfalls wie bisher, eine Auspackkammer, in der das bzw. die in der Aufnahmekammer aufgenommen Bauteile aus den nicht verfestigten Baumaterialrückständen ausgepackt werden können.

Zwischen der Aufnahmekammer und der Auspackkammer befindet sich eine horizontale Trennwand. Durch die Trennwand wird verhindert, dass das nicht verfestigte Pulver während des Auspackens des Bauteils, in die Aufnahmekammer gelangen kann. Damit das Bauteil jedoch trotzdem in der Auspackammer ausgepackt werden kann, weist die Trennwand eine Übergabeöffnung bzw. einen Durchbruch auf.

Auch bei der erfindungsgemäßen Auspackvorrichtung können der Transport des Baubehälters von der Fertigungsvorrichtung zur Auspackvorrichtung und die Übergabe mit Hilfe eines Handhabungsgeräts, wie beispielsweise einem Gabelstapler oder dergleichen, erfolgen.

Erfindungsgemäß befindet sich in der Aufnahmekammer jedoch nun eine höhenverstellbare Baubehälter-Hubeinrichtung. Diese ist so ausgebildet, um einen in der Aufnahmekammer aufgenommenen, zu entleerenden Baubehälter automatisch von einer Baubehälter-Aufnahmeposition in eine Baubehälter-Auspackposition zu verfahren. Die "Baubehälter-Aufnahmeposition" ist dabei dadurch gekennzeichnet, dass in dieser Position ein Baubehälter in der Aufnahmekammer aufgenommen werden kann. Die "Baubehälter-Auspackposition" ist hingegen dadurch gekennzeichnet, dass in dieser Position ein Bauteil in der Auspackkammer ausgepackt werden kann.

Mit Hilfe der Baubehälter-Hubeinrichtung können die Baubehälter leicht, sicher und gleichmäßig angehoben werden. Es ist zudem kein manuelles Hochschwenken eines Bügels etc. notwendig, um die sehr schweren Baubehälter auszurichten. Zudem braucht ein Baubehälter nicht in einem zusätzlichen Arbeitsschritt von einem Benutzer eingeklemmt werden, damit der zu entleerende Baubehälter in seiner Zielposition fixiert ist.

Außerdem kann der Baubehälter einfach unten in die Auspackkammer der erfindungsgemäßen Auspackvorrichtung hineingeschoben werden, es ist also kein zusätzliches Anheben des Baubehälters mit dem Handhabungsgerät nötig, um diesen in der Auspackkammer aufnehmen zu können. Besonders bevorzugt ist die Baubehälter-Hubeinrichtung so ausgebildet, dass sie von unten gegen die Baubehälterwand des Baubehälters drückt. Die Baubehälterwand muss also keinen Kragen an ihrer Oberkante mehr aufweisen.

Zudem weist die Auspackvorrichtung erfindungsgemäß eine in der Aufnahmekammer befindliche höhenverstellbare Aufbauplattform-Hubeinrichtung auf, welche ausgebildet ist, um eine Aufbauplattform eines in der Aufnahmekammer aufgenommen Baubehälters von einer Aufbauplattform-Ausgangsposition in eine Aufbauplattform-Auspackposition zu verfahren. Die Aufbauplattform-Hubeinrichtung wirkt dabei parallel zur Baubehälter-Hubeinrichtung, d.h. die beiden genannten Hubeinrichtungen weisen eine parallele Wegstrecke bzw. Hubrichtung auf. Die "Aufbauplattform-Ausgangsposition" ist dadurch gekennzeichnet, dass in dieser Position die Aufbauplattform des Baubehälters von der Aufbauplattform-Hubeinrichtung aufgenommen werden kann und die Aufbauplattform auf einem unteren Rand eines Baubehälters aufliegt, sich also unten in der Baubehälterwand des Baubehälters befindet. Eine "Aufbauplattform-Auspackposition" ist hingegen dadurch gekennzeichnet, dass in dieser Position ein auf der Aufbauplattform gelagertes und in einer Vorrichtung zur additiven Fertigung gefertigtes Bauteil in der Auspackkammer ausgepackt bzw. gereinigt werden kann derart, dass beim Auspackvorgang die Aufbauplattform anforderungsgerecht und schrittweise im Rahmen des Baubehälters nach oben bewegt wird, bis eine Endposition ("Aufbauplattform-Auspack-Endposition") des Verfahrweges der Aufbauplattform im Baubehälter erreicht ist. In dieser "Aufbauplattform-Auspack-Endposition" befindet sich die Aufbauplattform in der obersten möglichen Stellung innerhalb des Baubehälters. Die Aufbauplattform-Ausgangsposition und die Aufbauplattform-Auspackpositionen beziehen sich also immer auf die Position der Aufbauplattform (also des Bodens des Baubehälters) zur umlaufenden Baubehälterwand des Baubehälters, wobei es streng genommen eine Vielzahl von Aufbauplattform-Auspackpositionen gibt, die von einer initialen Aufbauplattform-Auspackposition angefangen bis zur Aufbauplattform-Auspack-Endposition reichen. Im Folgenden wird jede dieser Vielzahl von Aufbauplattform-Auspackpositionen generisch und pauschal als Aufbauplattform-Auspackposition bezeichnet. "Anforderungsgerecht" bedeutet hier, dass je nach Bauteilgeometrie portionsweise, insbesondere manuell, unverfestigtes Aufbaumaterial durch den Bediener vom Bauteil entfernt werden kann. Grundsätzlich können die möglichen, d.h. anfahrbaren, Aufbauplattform-Auspackpositionen auch stufenlos aneinandergrenzen.

Eine weitere Komponente der erfindungsgemäßen Auspackvorrichtung ist eine Steuereinrichtung, um zumindest ein Steuersignal an die Baubehälter-Hubeinrichtung und die Aufbauplattform-Hubeinrichtung auszugeben. Grundsätzlich kann ein gemeinsames Steuersignal an die Baubehälter-Hubeinrichtung und die Aufbauplattform-Hubeinrichtung ausgegeben werden. Es können aber an die Baubehälter-Hubeinrichtung und die Aufbauplattform-Hubeinrichtung auch jeweils eigene, zueinander zeitlich koordinierte Steuersignale ausgegeben werden. D.h. die Steuereinrichtung kann mit der Baubehälter-Hubeinrichtung und der Aufbauplattform-Hubeinrichtung so kommunizieren, dass die Bewegungen der Baubehälter-Hubeinrichtung und der Aufbauplattform-Hubeinrichtung in der gewünschten Weise koordiniert zueinander, also aufeinander zeitlich abgestimmt, erfolgen. Besonders bevorzugte zeitliche Abläufe und Varianten von Steuersignalen werden später noch erläutert.

Bei dem entsprechenden erfindungsgemäßen Verfahren zur Steuerung einer Auspackvorrichtung werden dementsprechend zumindest die folgenden Schritte durchgeführt:
Zunächst wird ein Baubehälter in der Aufnahmekammer aufgenommen, welcher beispielsweise zuvor von einem Handhabungsgerät, z. B. einem Gabelstapler, zur Auspackvorrichtung befördert worden ist. Daraufhin werden Steuersignale bzw. ein Steuersignal an die Baubehälter-Hubeinrichtung und an die Aufbauplattform-Hubeinrichtung ausgegeben, so dass der auf der Baubehälter-Hubeinrichtung befindliche Baubehälter von einer Baubehälter-Aufnahmeposition in eine Baubehälter-Auspackposition verfahren wird. Dabei wird automatisch zeitlich koordiniert die Aufbauplattform des Baubehälters mittels der Aufbauplattform-Hubeinrichtung von einer Aufbauplattform-Aufnahmeposition in eine Aufbauplattform-Auspackposition verfahren.

Weitere, besonders vorteilhafte Ausgestaltungen und Weiterbildungen der Erfindung ergeben sich aus den abhängigen Ansprüchen sowie der nachfolgenden Beschreibung, wobei die unabhängigen Ansprüche einer Anspruchskategorie auch analog zu den abhängigen Ansprüchen und Ausführungsbeispielen einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Ein in der Aufnahmekammer der Auspackvorrichtung befindlicher Baubehälter kann wie zuvor beschrieben vertikal in Richtung der Auspackkammer nach oben verfahren werden, um ein Bauteil auszupacken. Zum anderen kann der Baubehälter auch wieder nach unten verfahren werden, um den Baubehälter wieder aus der Auspackkammer herauszufahren, nachdem die nicht verfestigten Baumaterialrückstände bzw. die Fertigungsprodukte entfernt wurden. Dazu können entsprechend koordinierte Steuersignale an die Aufbauplattform-Hubeinrichtung und die Baubehälter-Hubeinrichtung ausgegeben werden, zur Absenkung der Aufbauplattform von der Aufbauplattform-Auspackposition zurück in die Aufbauplattform-Aufnahmeposition des Baubehälters und zur Absenkung des Baubehälters von einer Baubehälter-Auspackposition in eine Baubehälter-Aufnahmeposition.

Ob und zu welchem Zeitpunkt ein Baubehälter auf einer Baubehälter-Hubeinrichtung und der Aufbauplattform-Hubeinrichtung herauf- oder heruntergefahren wird, kann je nach Bedarf bzw. Wahl eines Benutzers der erfindungsgemäßen Auspackvorrichtung erfolgen.

Hierzu weist die Auspackvorrichtung eine Benutzerschnittstelle auf, die mit der Steuereinrichtung gekoppelt ist. Diese Benutzerschnittstelle kann dann je nach Anforderung, wann ein Baubehälter und wann koordiniert die Aufbauplattform des Baubehälters angehoben werden sollen bzw. je nach Aufbau der Auspackvorrichtung bzw. der Benutzerschnittstelle einen oder koordiniert mehrere Hebe-Steuerbefehle oder einen oder koordiniert mehrere Senk-Steuerbefehle (damit die Aufbauplattform des Baubehälters und koordiniert der Baubehälter abgesenkt wird) an die Steuereinrichtung ausgeben.

Die Steuereinrichtung ist hierbei vorzugsweise so ausgebildet, um bei einem oder mehreren eingehenden Hebe-Steuerbefehl(en) ein Baubehälter-Hebe-Steuersignal an die Baubehälter-Hubeinrichtung zu senden. Durch diese/n eingehenden Hebe-Steuerbefehl/e wird also die Baubehälter-Hubeinrichtung und somit ein auf der Baubehälter-Hubeinrichtung befindlicher Baubehälter von der Baubehälter-Aufnahmeposition in die Baubehälter-Auspackposition verfahren. Zudem ist die Steuereinrichtung vorzugsweise so ausgebildet, dass sie ein Aufbauplattform-Hebe-Steuersignal an die Aufbauplattform-Hubeinrichtung senden kann. Durch dieses Aufbauplattform-Hebe-Steuersignal wird automatisch die Aufbauplattform-Hubeinrichtung und somit die Aufbauplattform des Baubehälters von der Aufbauplattform-Ausgangsposition in die Aufbauplattform-Auspackposition nach oben verfahren.

Es soll in diesem Zusammenhang darauf hingewiesen werden, dass sich die Begriffe "oben" und "unten" etc. allgemein und auch im Rahmen der vorliegenden Erfindung im Folgenden auf die übliche Anordnung im Raum beziehen. Dabei entspricht "oben" in Richtung einer Deckenwand der Auspackvorrichtung weisend und "unten" in Richtung eines Bodens der Auspackvorrichtung weisend.

Bevorzugt wird die Aufbauplattform-Hubeinrichtung dabei zeitlich verzögert zur Baubehälter-Hubeinrichtung verfahren. Durch die zeitliche Verzögerung kann sichergestellt werden, dass die nicht verfestigten Baumaterialrückstände in dem Baubehälter verbleiben und nicht herausrieseln können, während dieser verfahren wird und noch nicht an der Auspackkammer "angedockt" hat. D .h. durch die zeitliche Koordinierung wird dafür gesorgt, dass die Aufbauplattform im Baubehälter nur soweit bzw. schnell im Rahmen verschoben wird, dass die Füllung im Baubehälter nicht über einen oberen Rand der Baubehälterwand des Baubehälters hinausgeht (bevor die Baubehälter-Hubeinrichtung sich in der Baubehälter-Auspackposition des Baubehälters befindet).

Zum Beispiel kann die Aufbauplattform-Hubeinrichtung erst dann verfahren werden, wenn die Baubehälter-Hubeinrichtung mit einem auf der Baubehälter-Hubeinrichtung befindlichen Baubehälter die Baubehälter-Auspackposition erreicht hat oder zumindest im Wesentlichen erreicht hat. "Im Wesentlichen" meint hier, dass der Baubehälter die Baubehälter-Auspackposition soweit erreicht hat, dass während der restlichen Verfahrzeit der Baubehälter-Hubeinrichtung nicht die Aufbauplattform-Hubeinrichtung so weit hochgefahren wird, dass die Füllung den oberen Rand der Baubehälterwand des Baubehälters erreicht. Dies hängt natürlich von der Füllhöhe im Baubehälter ab. Ob der Baubehälter die Baubehälter-Auspackposition erreicht oder im Wesentlichen erreicht hat, kann z.B. über einen Endschalter überprüft werden und dann beispielsweise mit einem 3/2 Wegeventil entsprechend umgesetzt werden.

Ein gleichzeitiger Start ist aber auch möglich, solange dadurch nicht die Aufbauplattform im Baubehälter nach oben bewegt wird, also wenn die Aufbauplattform-Hubeinrichtung beispielsweise maximal in derselben Geschwindigkeit wie die Baubehälter-Hubeinrichtung verfährt, da zwischen der Aufbauplattform und der Aufbauplattform-Hubeinrichtung ein Spalt ist, wenn sich ein Baubehälter in einer Baubehälter-Aufnahmeposition befindet.

Vorzugsweise wird hierbei durch eine konstruktive Ausgestaltung der Verfahrwege und/ oder mittels einer gesteuerten Verfahrgeschwindigkeit dafür gesorgt, dass - auch bei einem gemeinsamen Start - die Aufbauplattform-Hubeinrichtung die Aufbauplattform des zu entleerenden Baubehälters erst erreicht, wenn die Baubehälter-Hubeinrichtung die Baubehälter-Auspackposition des Baubehälters erreicht hat.

Wenn die Baubehälter-Hubeinrichtung und die Aufbauplattform-Hubeinrichtung bevorzugt gleichzeitig starten, kann dies besonders bevorzugt mit einem gemeinsamen Hebe-Steuersignal erfolgen, d. h. das Baubehälter-Hebe-Steuersignal entspricht gleichzeitig dem Aufbauplattform-Hebe-Steuersignal bzw. wird als solches genutzt oder umgekehrt. Es wird dann mittels des einen gemeinsamen, eingehenden Hebe-Steuersignals die Baubehälter-Hubeinrichtung und somit der auf der Baubehälter-Hubeinrichtung befindliche Baubehälter von der Baubehälter-Aufnahmeposition in die Baubehälter-Auspackposition verfahren und automatisch die Aufbauplattform-Hubeinrichtung von der Aufbauplattform-Ausgangsposition in die Aufbauplattform-Auspackposition.

Die Ausgabe der Steuersignale an die Baubehälter-Hubeinrichtung und die Aufbauplattform-Hubeinrichtung sowie deren Antrieb kann weitgehend oder vollständig softwaregesteuert bzw. elektronisch und/oder elektrisch erfolgen, z. B. mit E-Motoren wie einem Spindelmotor. Bevorzugt können die Ansteuerung und der Antrieb der Baubehälter-Hubeinrichtung und der Aufbauplattform-Hubeinrichtung aber zumindest teilweise auch hydraulisch und/oder pneumatisch erfolgen. Eine Umsetzung mittels pneumatischer Komponenten und/oder hydraulischer Komponenten bietet sich insbesondere an, wenn die Baubehälter-Hubeinrichtung und die Aufbauplattform-Hubeinrichtung mittels eines gemeinsamen Steuersignals gestartet werden sollen. Durch die Anordnung der hydraulischen bzw. pneumatischen und der mechanischen Verfahrwege lässt sich besonders einfach der zeitliche Ablauf koordinieren, so dass auch bei einem gemeinsamen Start die Aufbauplattform-Hubeinrichtung die Aufbauplattform des zu entleerenden Baubehälters erst dann erreicht, wenn die Baubehälter-Hubeinrichtung die Baubehälter-Auspackposition des Baubehälters erreicht hat.

Die Vorteile eines pneumatischen und/ oder hydraulischen Antriebs liegen beispielsweise in einer stufenlosen Schaltung beziehungsweise Regelung der Geschwindigkeiten und Verfahrwege des Antriebs. Zudem benötigen pneumatische Antriebe keine zusätzliche Energie, wenn sie ihre Position "halten", was bei dieser Anwendung während des Verweilens in einer Aufbauplattform-Auspackposition der Fall ist.

Wie bereits oben erwähnt kann die Steuereinrichtung bevorzugt so ausgebildet sein, um bei einem von der Benutzerschnittelle ankommenden Senk-Steuerbefehl oder Senk-Steuerbefehlen ein Aufbauplattform-Senk-Steuersignal an die Aufbauplattform-Hubeinrichtung zu senden, um die Aufbauplattform eines auf der Baubehälter-Hubeinrichtung befindlichen Baubehälters mittels der Aufbauplattform-Hubeinrichtung von der Aufbauplattform-Auspackposition in die Aufbauplattform-Ausgangsposition zu verfahren. Weiterhin kann die Steuereinrichtung dann auch, vorzugsweise zeitlich verzögert zum Aufbauplattform-Senk-Steuersignal, ein Baubehälter-Senk-Steuersignal an die Baubehälter-Hubeinrichtung senden, um ebenso automatisch den Baubehälter von der Baubehälter-Auspackposition wieder in die Baubehälter-Aufnahmeposition herunter zu verfahren. Wie erwähnt kann es sich bei dem Baubehälter-Senk-Steuersignal und dem Aufbauplattform-Senk-Steuersignal um ein und dasselbe Senk-Steuersignal handeln.

Ganz besonders bevorzugt ist die Steuereinrichtung so ausgebildet, dass der Baubehälter erst dann von der Baubehälter-Auspackposition weggefahren wird, wenn die Aufbauplattform des Baubehälters zumindest bereits ein Stück weit im Baubehälter nach unten gefahren ist. Dadurch ist dafür gesorgt, dass eventuelle Reste von Aufbaumaterial auf der Aufbauplattform zunächst im Baubehälter bleiben und nicht seitlich in die Aufnahmekammer fallen. Es kann z.B. über einen Endschalter überprüft werden, ob die Aufbauplattform-Hubeinrichtung wieder ganz unten ist. Dann ist auch sicher, dass die Aufbauplattform des Baubehälters die Aufbauplattform-Ausgangsposition (innerhalb des Baubehälters) erreicht hat, also wieder im Baubehälter ganz unten positioniert ist. Anhand dieser Überprüfung kann sichergestellt werden, dass der Baubehälter erst aus der Auspackvorrichtung entnommen wird, wenn die Aufbauplattform-Hubeinrichtung vollständig nach unten gefahren ist. Auch hier wäre aber ein gleichzeitiger Start der Baubehälter-Hubeinrichtung und der Aufbauplattform-Hubeinrichtung möglich.

Die Umsetzung der Ansteuerung bzw. Antrieb der Baubehälter-Hubeinrichtung und der Aufbauplattform-Hubeinrichtung kann auch hier rein softwarebasiert bzw. elektronisch und/oder elektrisch erfolgen und/oder pneumatisch und/oder hydraulisch. Bei einer zumindest teilweise pneumatischen und/oder hydraulischen Realisierung kann z. B. auch mit einem Positionsschalter oder dergleichen dafür gesorgt werden, dass beim Absenken zunächst die Aufbauplattform-Hubeinrichtung startet und die Baubehälter-Hubeinrichtung erst dann mit dem Absenken beginnt, wenn die Aufbauplattform-Hubeinrichtung eine bestimmte Position, z.B. wieder die Aufbauplattform-Ausgangsposition, erreicht hat.

Die mit der Steuereinrichtung gekoppelte Benutzerschnittstelle kann ein oder mehrere Bedienelemente aufweisen. Die Bedienelemente können im Prinzip beliebig ausgebildet sein. Sie können z.B. für eine manuelle Bedienung ausgebildet sein, wie z.B. Schalter oder Bedienknöpfe, wobei diese auch als Touch-Button oder dergleichen auf einem Touch-Display ausgebildet sein können. Eine weitere Möglichkeit sind Bedienelemente zur Erkennung von Gestiken des Benutzers als Steuerbefehle. Diese können z.B. eine Kamera und ein Gestikerkennungsmodul umfassen. Dabei sind Bedienelemente zur Erkennung von Gestiken des Benutzers auch insoweit als manuelle Bedienelemente zu verstehen, als diese die Gestik einer oder beider Hände des Benutzers als Steuerbefehle interpretieren sollen. Die Bedienelemente können aber beispielsweise auch zum Empfang von Sprachbefehlen ausgebildet sein, also z.B. in Form eines Mikrofons und einem Spracherkennungsmodul. Eine Benutzerschnittstelle kann insbesondere auch eine Kombination unterschiedlicher Bedienelemente umfassen.

Die Benutzerschnittstelle sowie die Steuereinrichtung können vorzugsweise so ausgebildet sein, dass nur bei zeitlich miteinander abgestimmten Betätigungen zumindest zweier räumlich getrennter Bedienschnittstellen der Benutzerschnittstelle ein Baubehälter-Hebe-Steuersignal und/oder ein Aufbauplattform-Hebe-Steuersignal ausgegeben wird.

Bevorzugt weist die Benutzerschnittstelle dazu zumindest drei Bedienschnittstellen, bzw. Bedienelemente auf, um bei gleichzeitiger Bedienung bzw. Einsatzes eines ersten Bedienelements und eines zweiten Bedienelements einen oder mehrere Hebe-Steuerbefehle an die Steuereinrichtung auszugeben.

Bei manuellen Bedienelementen, wie bspw. Schaltern etc. kann bei einer Bedienung bzw. eines Einsatzes eines dritten Bedienelements ein Senk-Steuerbefehl an die Steuereinrichtung ausgegeben werden.

Die Bedingung einer zeitlich miteinander abgestimmten Betätigung der Bedienschnittstellen bzw. die Überprüfung dieser Bedingung, ob alle Hebesteuerbefehle zeitgleich anliegen, kann beispielsweise durch eine Sicherheitsschaltung z. B. mit UND-Gattern erfolgen. Diese Sicherheitsschaltung oder ein Teil dieser Sicherheitsschaltung kann vor der Steuereinrichtung integriert sein. Dadurch kann die Benutzerschnittstelle, wie bereits erwähnt, einen oder mehrere Hebe-Steuerbefehle an die Steuereinrichtung ausgeben, wenn die oben genannte Bedingung erfüllt ist. Die Überprüfung der Bedingung kann aber auch erst vollständig in der Steuereinrichtung erfolgen, wie dies später noch näher erläutert wird.

Besonders bevorzugt ist die Steuereinrichtung so ausgebildet, dass nur bei gleichzeitiger beidhändiger Betätigung ein Baubehälter-Hebe-Steuersignal und/oder ein Aufbauplattform-Hebe-Steuersignal ausgegeben wird. Dies kann durch die zuvor beschriebene Kontrolle realisiert werden, bei der überprüft wird, dass nur bei zeitlich miteinander abgestimmten - nämlich in diesem Fall gleichzeitigen - Betätigungen zumindest zweier räumlich getrennter Bedienschnittstellen der Benutzerschnittstelle ein Baubehälter-Hebe-Steuersignal und/oder ein Aufbauplattform-Hebe-Steuersignal ausgegeben wird. Es kann aber auch verlangt werden, dass der Benutzer beide Hände zur Formulierung des (visuellen) Steuerbefehls für eine Gestik-Erkennung nutzt.

Wenn ein Benutzer zwangsläufig automatisch beide Hände benutzen muss, um ein Baubehälter-Hebe-Steuersignal und/oder ein Aufbauplattform-Hebe-Steuersignal auszulösen, stellt dies einen weiteren Sicherheitsaspekt der Auspackvorrichtung dar, da so sichergestellt werden kann, dass der Benutzer beide Hände aus dem Verfahrbereich entfernt hat und sie so nicht in der Auspackvorrichtung einklemmen kann.

Auch bei einer Sprachansteuerung lässt sich eine entsprechende Sicherheit erreichen, dass sich die Hände nicht an der Vorrichtung befinden, wenn dafür gesorgt ist, dass der Benutzer die Befehle in einem ausreichenden Abstand zur Auspackvorrichtung aussprechen muss, damit sie erkannt und/oder akzeptiert werden.

Die Auspackkammer der Auspackvorrichtung weist vorzugsweise eine Abdeckhaube auf. Ist die Abdeckhaube verschlossen, was z. B. mittels eines Sensors überprüft werden kann, kann dies entsprechend an die Steuereinrichtung signalisiert werden. Es wird dann vorzugsweise erst ein Baubehälter-Hebe-Steuersignal an einen Baubehälter und ein Aufbauplattform-Hebe-Steuersignal an die Aufbauplattform gesendet, wenn die Bedienschnittstellen zeitlich miteinander abgestimmt angewählt sind, also wenn alle Hebesteuerbefehle zeitgleich anliegen, und zusätzlich die Abdeckhaube verschlossen ist. Hierdurch kann weiterhin die Gefahr reduziert werden, dass ein Benutzer bzw. Bediener oder eine andere daneben stehende Person sich die Finger etc. in der Auspackkammer klemmen kann.

Zudem kann durch eine Abdeckhaube die Pulverstaubbelastung für den Bediener stark reduziert oder sogar ganz vermieden werden. Damit ein Benutzer trotz einer geschlossenen Abdeckhaube ein Bauteil auspacken kann, umfasst die Abdeckhaube vorzugsweise einen Eingriffsbereich, durch welchen der Benutzer hindurchgreifen kann, um ein Bauteil in einem Auspackbereich der Auspackkammer zu reinigen. Besonders bevorzugt umfasst der Eingriffsbereich Lamellen durch die ein Benutzer hindurchgreift, wenn er ein Bauteil auspacken möchte. Die Lamellen können ebenso dafür sorgen, dass möglichst kein oder nur relativ wenig Pulver außerhalb der Auspackvorrichtung gelangt. Sie können beispielsweise während des Auspackprozesses eventuelle Pulverreste von den Händen eines Benutzers abstreifen, wenn dieser seine Hände aus der Auspackkammer herausnimmt. Um den Auspackprozess bei einer geschlossenen Abdeckhaube beispielsweise zu betrachten und zu überprüfen, weist die Abdeckhaube vorzugsweise ein Sichtfenster auf.

Für die konkrete Konstruktion der Baubehälter-Hubeinrichtung und der Aufbauplattform-Hubeinrichtung gibt es verschiedene Möglichkeiten.

Vorzugsweise umfasst die Baubehälter-Hubeinrichtung zumindest zwei, besonders bevorzugt mindestens vier, Hubzylinder, beispielsweise Hydraulikstempel oder Pneumatikstempel. Dabei weist ein Hubzylinder vorzugsweise ein Zylindergehäuse und einen darin verschiebbar gelagerten, nach oben ausfahrbaren Kolben auf. Die Kolben können bevorzugt so angeordnet sein, dass sie von unten gegen die Baubehälterwand des Baubehälters drücken, z. B. an zwei gegenüberliegenden Seiten, besonders bevorzugt gleichzeitig in allen vier Eckbereichen. Eine solche Konstruktion der Bauplattform-Hubeinrichtung mit seitlich bzw. in den Eckbereichen am Rahmen unter einen Baubehälter drückenden Hubzylindern hat den Vorteil, dass der mittlere, zentrale Bereich unter dem Baubehälter frei bleibt für die Aufbauplattform-Hubeinrichtung.

Die Aufbauplattform-Hubeinrichtung ist dementsprechend bevorzugt so ausgebildet, dass sie von unten auf die Aufbauplattform bzw. den Boden des Baubehälters einwirken kann, um z. B. nach einem vorangegangenen Aufbauplattform-Hebe-Steuersignal den Boden im Rahmen nach oben zu schieben. Es ist somit keine extra Ausgestaltung der Baubehälterwand des Baubehälters erforderlich, wie beispielsweise ein Einbringen eines Schlitzes oder dergleichen, damit die Aufbauplattform von der Aufbauplattform-Hubeinrichtung ergriffen werden kann. Die Aufbauplattform-Hubeinrichtung umfasst bevorzugt zumindest einen Hubtisch, besonders bevorzugt einen Scherenhubtisch.

Wie bereits erwähnt, ist es vorteilhaft, wenn keine nicht verfestigten Baumaterialrückstände in die Aufnahmekammer gelangen, wenn der Baubehälter nach oben in die Baubehälter-Auspackposition verfahren wird. Um dies zu realisieren, kann die Übergabeöffnung auf verschiedene Weise ausgestaltet sein.

Eine Möglichkeit ist es, dass die Übergabeöffnung in der Trennwand zwischen der Aufnahmekammer und der Auspackkammer bevorzugt so ausgebildet ist, dass, wenn sich der Baubehälter bzw. die Baubehälter-Hubeinrichtung in der Baubehälter-Auspackposition befindet, die zur Trennwand benachbarte äußere Oberkante der Baubehälterwand des betreffenden Baubehälters die Übergabeöffnung bzw. den Durchbruch indirekt oder direkt (von der Aufnahmekammer aus gesehen) ringsum umschließt bzw. ummantelt bzw. die Übergabeöffnung gegen die Aufnahmekammer abdichtet. Die Baubehälterwand stößt dabei von unten gegen die Trennwand an.

Hierbei ist der Umfang der Übergabeöffnung besonders bevorzugt größer oder gleich einem Innenumfang eines definierten Rahmeninnenmaßes der umlaufenden Baubehälterwand eines aufzunehmenden Baubehälters (d.h. für dessen Aufnahme die Auspackvorrichtung vorgesehen ist) und der Umfang der Übergabeöffnung ist kleiner als ein Außenumfang eines definierten Rahmenaußenmaßes der umlaufenden Baubehälterwand eines aufzunehmenden Baubehälters, wobei die Konturen der Ränder der Baubehälterwand und der Öffnung des Baubehälters im Wesentlichen parallel zueinander ausgerichtet sind. Die Übergabeöffnung liegt also besonders bevorzugt innerhalb einer durch den äußeren und den inneren Rand der Baubehälterwand des Baubehälters vorgegebenen Umgrenzung. Unter einem "definierten" bzw. vorgegebenen Baubehältermaß bzw. Rahmeninnenmaß oder Rahmenaußenmaß ist im Rahmen der vorliegenden Erfindung entsprechend ein jeweiliges Norm- oder Standardmaß für die in der Auspackvorrichtung zu verwendenden bzw. zu entleerenden Baubehälter zu verstehen.

Insbesondere ist die kleinste Seitenlänge der Übergabeöffnung größer oder gleich einer kleinsten inneren Seitenlänge eines definierten Rahmeninnenmaßes (betrachtet von einer äußeren Oberkante der Baubehälterwand) und eine maximale Seitenlänge der Übergabeöffnung ist größer oder gleich einer maximalen inneren Seitenlänge eines definierten Rahmeninnenmaßes (betrachtet von der äußeren Oberkante der Baubehälterwand). Eine kleinste Seitenlänge der Übergabeöffnung ist zudem kleiner als eine kleinste äußere Seitenlänge eines definierten Rahmenaußenmaßes (betrachtet von der äußeren Oberkante der Baubehälterwand) und eine maximale Seitenlänge der Übergabeöffnung ist kleiner als eine maximale äußere Seitenlänge eines definierten Rahmeninnenmaßes (betrachtet von der äußeren Oberkante der Baubehälterwand). So wird vermieden, dass die Übergabeöffnung in das lichte Maß des Baubehälters hineinragt und dann nicht verfestigte Baumaterialbestände in einem Überlappungsbereich der Trennwand und der Auflageplattform gepresst werden, die dann nur schwer wieder entfernt werden können.

Bei einer bevorzugten Ausgestaltung der Übergabeöffnung ist diese aber so ausgebildet, dass eine Baubehälterwand eines Baubehälters passgenau in die Übergabeöffnung einfahren kann, wenn der Baubehälter in die Baubehälter-Auspackposition verfahren wird. Die Übergabeöffnung ist dabei so ausgebildet, dass sie zur Trennwand benachbarte Seitenwände einer Baubehälterwand des Baubehälters ringsum umschließt, wenn sich dieser in der Baubehälter-Auspackposition befindet. Äußere Seitenwände der in die Übergabeöffnung eingefahrenen umlaufenden Baubehälterwand werden dabei ringsum von der Übergabeöffnung umschlossen.

Befindet sich der Baubehälter in der Baubehälter-Auspackposition, so liegen die Oberkante des Baubehälters und eine Oberseite der Trennwand bevorzugt auf einer Höhe bzw. Ebene, d. h. sie sind bündig zueinander ausgerichtet.

Vorzugsweise ist die eingefahrene Baubehälterwand nach oben hin verjüngt bzw. sie ist an ihrem oberen Ende d. h. zu ihrer Oberkante hinweisend konisch ausgebildet. Dabei laufen die Schrägen an den Oberkanten der Baubehälterwand zur Bildung der konischen Form nach oben aufeinander zu.

Vorzugsweise weist die Auspackvorrichtung unterhalb der Trennwand eine Einschubhilfe bzw. eine Einschubschiene auf, welche zur genauen Ausrichtung des Baubehälters dient, während dieser nach oben verfahren wird. Dazu ist die Einschubschiene bevorzugt an einer unteren zur Baubehälterwand hinweisenden Kante abgeschrägt, d. h. die Einschubhilfe weist dort eine sich nach unten erweiternde konische Form auf, welche mit der konisch nach oben zulaufenden Ausgestaltung der Baubehälterwand zusammenwirkt.

Um die nach der Reinigung des Bauteils losen, d. h. nicht verfestigten, Baumaterialbestände aufzunehmen und zu sammeln, weist die Auspackvorrichtung vorzugsweise eine Rest-Pulverkammer auf. Diese befindet sich besonders bevorzugt ebenfalls unterhalb der Auspackkammer. Vorzugsweise befindet sich die Rest-Pulverkammer neben der Aufnahmekammer.

Die Rest-Pulverkammer weist, vorzugsweise eine rollbare, verschiebbare, Pulver-Aufnahmebox auf. Das in der Pulver-Aufnahmebox gesammelte Pulver kann dann beispielsweise wieder aufbereitet und erneut zur additiven Fertigung gebracht werden. Die Rest-Pulverkammer kann aber alternativ oder zusätzlich auch selbst mit einer Pulver-Abtransport-Einrichtung ausgestattet sein. Die Pulver-Abtransport-Einrichtung kann dabei vorzugsweise eine Pulverpumpe umfassen, mit der das, vorzugsweise gesiebte, Pulver in eine externe Box zur Pulverwiederaufbereitung transportiert werden kann.

Die Auspackkammer ist bevorzugt über eine Siebanordnung mit der Rest-Pulverkammer verbunden.

Die Siebanordnung kann z. B. bevorzugt einen Siebbereich in der Trennwand oder unterhalb der Trennwand zwischen Auspackkammer und Rest-Pulverkammer umfassen. Die Siebanordnung kann besonders bevorzugt auch mehrstufig sein. Beispielsweise kann sie ein Grobsieb in der Trennwand und ein Feinsieb unterhalb der Trennwand bzw. unterhalb des Grobsiebs umfassen. Die Siebanordnung befindet sich vorzugsweise oberhalb der Aufnahmebox oder einem Anschluss einer Pulver-Abtransport-Einrichtung. Durch diesen Siebbereich können dann die nicht verfestigten Baumaterialrückstände von der Auspacckammer in die Restpulverkammer gelangen. Mithilfe der Siebanordnung können beispielsweise größere Brocken der Baumaterialrückstände vom noch verwendbaren Pulver abgetrennt werden, was einem Schritt einer Wiederaufbereitung des Baumaterials entsprechen kann. Vor allem kann durch die Siebanordnung sichergestellt werden, dass nicht etwaige kleine Bauteile mit dem Pulver abtransportiert werden.

Die Siebeinheit kann dann alternativ oder zusätzlich direkt an eine Pulver-Abtransport-Einrichtung angeschlossen sein. Hierbei könnte eine Pulverpumpe das gesiebte Pulver direkt in eine Box einer Fertigungsvorrichtung befördern, wodurch keine Pulver-Aufnahmebox benötigt werden würde.

Während des Auspackens des Bauteils in der Auspackkammer kann es zu Pulverstaubaufwirbelungen der nicht verfestigten feinen Baumaterialrückstände kommen. Damit der Pulverstaub z. B. den Bediener nicht zu sehr belastet und um den Pulverstaub gleich zu entfernen, weist die Auspackvorrichtung bevorzugt eine Absaugeinrichtung auf. Damit wird der überschüssige Pulverstaub aus der Auspackkammer abgesaugt, während der Hauptteil der nicht verfestigten Baumaterialrückstände vorzugsweise über die Siebanordnung entfernt wird.

Diese Absaugeinrichtung weist vorzugsweise Absaug-Öffnungen auf, besonders bevorzugt oberhalb eines Auspackbereichs, also insbesondere oberhalb der Aufbauplattform-Hubeinrichtung in der Aufbauplattform-Auspackposition.

Um den Pulverstaub möglichst gleich dort aufzusaugen, wo er aufgewirbelt wird, weist die Absaugeinrichtung bevorzugt eine Mehrzahl an Absaug-Öffnungen auf, also mindestens zwei Absaug-Öffnungen, an räumlich voneinander getrennten Stellen. Besonders bevorzugt weist die Absaugeinrichtung eine Vielzahl von Absaug-Öffnungen auf, beispielsweise bevorzugt mindestens fünf, besonders bevorzugt mindestens zehn, ganz besonders bevorzugt mindestens zwanzig. Um in einem möglichst großen Bereich in der Auspacckammer den Staub abzusaugen, sind die Absaug-Öffnungen bevorzugt entlang einer Haupterstreckungsrichtung der Auspackvorrichtung innerhalb der Auspackvorrichtung verteilt, besonders bevorzugt sind sie im Wesentlichen entlang der kompletten Länge in Haupterstreckungsrichtung innerhalb der Auspackvorrichtung verteilt. Um den Pulverstaub auch gleichmäßig im Raum der Auspackkammer abzusaugen, sind die Absaug-Öffnungen bevorzugt im Wesentlichen in gleichen Abständen zueinander verteilt und angeordnet. Unter Haupterstreckungsrichtung der Auspackkammer ist die Richtung der längsten Ausdehnung der Auspackkammer zu verstehen, also hier vorzugsweise die Richtung, in der sich die Auspackkammer vom Bereich über der Aufnahmekammer in den Bereich über der Rest-Pulverkammer erstreckt.

Um einen weiteren Schutzmechanismus für einen Benutzer der Auspackvorrichtung bereitzustellen, kann die Aufnahmekammer bevorzugt eine verschließbare Ladeöffnung umfassen, durch die der Baubehälter in die die Aufnahmekammer übergeben werden kann. Bevorzugt weist die Ladeöffnung ein oder mehrere Türen auf. Wurde ein Baubehälter in der Aufnahmekammer positioniert, so können die Türen wieder verschlossen werden. Dadurch kann ein Benutzer beispielsweise nicht während des Herab- oder Herunterfahrens eines Baubehälters in die Aufnahmekammer greifen.

Um zu überprüfen, ob die Türen geschlossen sind, können die Türen Sensoren aufweisen, die mit der Steuereinrichtung elektronisch und/oder pneumatisch und/oder hydraulisch verbunden sind. Es wird dann vorzugsweise erst ein Baubehälter-Hebe-Steuersignal an einen Baubehälter und ein Aufbauplattform-Hebe-Steuersignal an die Aufbauplattform gesendet, wenn die Bedienschnittstellen zeitlich miteinander abgestimmt angewählt sind, also wenn alle Hebesteuerbefehle zeitgleich anliegen, und zusätzlich die Türen verschlossen sind. Hierdurch kann weiterhin die Gefahr reduziert werden, dass ein Benutzer bzw. Bediener oder eine andere daneben stehende Person sich die Finger etc. in der Auspackkammer klemmen kann.

Vorzugsweise können die verschiedenen Hebevorgänge und/oder Senkvorgänge des Baubehälters und/oder der Aufbauplattform jederzeit gestoppt werden, indem ein für den Hebevorgang und/oder Senkvorgang erforderliches Bedienelement nicht mehr betätigt wird und/oder wenn ein zur Sicherheit abgefragtes Sensorsignal, beispielsweise von einem Sensor zur Kontrolle der geschlossenen Türen und/oder zur Kontrolle einer geschlossenen Abdeckhaube (plötzlich) nicht mehr anliegt.

Um das Risiko zu reduzieren, dass sich ein auf einer Baubehälter-Hubeinrichtung befindlicher Baubehälter, während er verfahren wird, verkantet und damit der Baubehälter auch möglichst exakt zur Übergabeöffnung in der Trennwand zur Auspackkammer ausgerichtet ist, weist die Aufnahmekammer vorzugsweise Zentrierelemente bzw. Abstandshalter auf, um einen in der Aufnahmekammer aufgenommenen Baubehälter passend auf der Baubehälter-Hubeinrichtung zu positionieren. Vorzugsweise befinden sich die Zentrierelemente an den Türen und den (seitlichen und hinteren) Innenwänden der Aufnahmekammer.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen jeweils schematisch:
- Figur 1: eine Darstellung einer Frontansicht einer erfindungsgemäßen Auspackvorrichtung;
- Figur 2: eine Frontansicht mit Teilschnitten durch die Auspackvorrichtung nach Figur 1 mit geöffneter Abdeckhaube und geöffneten Türen der Aufnahmekammer und Restpulverkammer und mit einem Schnitt durch einen Baubehälter, wobei sich die Baubehälter-Hubeinrichtung in einer Baubehälter-Aufnahmeposition und die Aufbauplattform-Hubeinrichtung in einer Aufbauplattform-Ausgangsposition befindet;
- Figur 3: die Auspackvorrichtung nach Figur 1 und 2 mit geöffneter Abdeckhaube und geöffneten Türen der Aufnahmekammer und Restpulverkammer, wobei sich die Baubehälter-Hubeinrichtung in einer Baubehälter-Auspackposition und die Aufbauplattform-Hubeinrichtung in einer Aufbauplattform-Auspack-Endposition befinden;
- Figur 4: eine vergrößerte Schnitt-Teilansicht des Baubehälters in der Baubehälter-Auspackposition nach Figur 3;
- Figur 5: eine Draufsicht auf eine Trennwand einer Auspackvorrichtung;
- Figur 6: grob schematisch ein Blockschaltbild einer ersten Ausführungsform einer Sicher-heitsschaltung;
- Figur 7: grob schematisch ein Blockschaltbild einer weiteren Ausführungsform einer Sicherheitsschaltung.

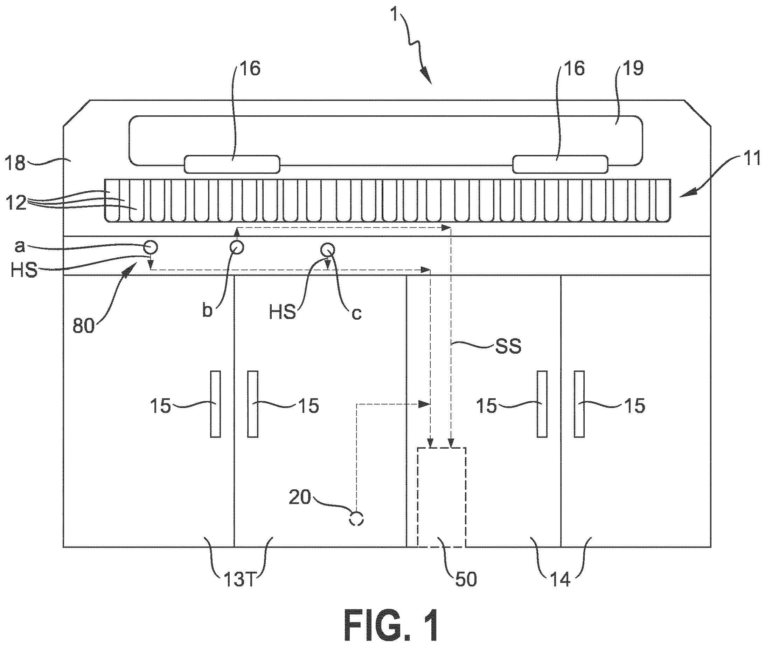

Die Figuren 1, 2 und 3 werden im Folgenden gemeinsam beschrieben, da sie dasselbe Ausführungsbeispiel einer erfindungsgemäßen Auspackvorrichtung 1 zeigen, jedoch in verschiedenen Betriebszuständen.

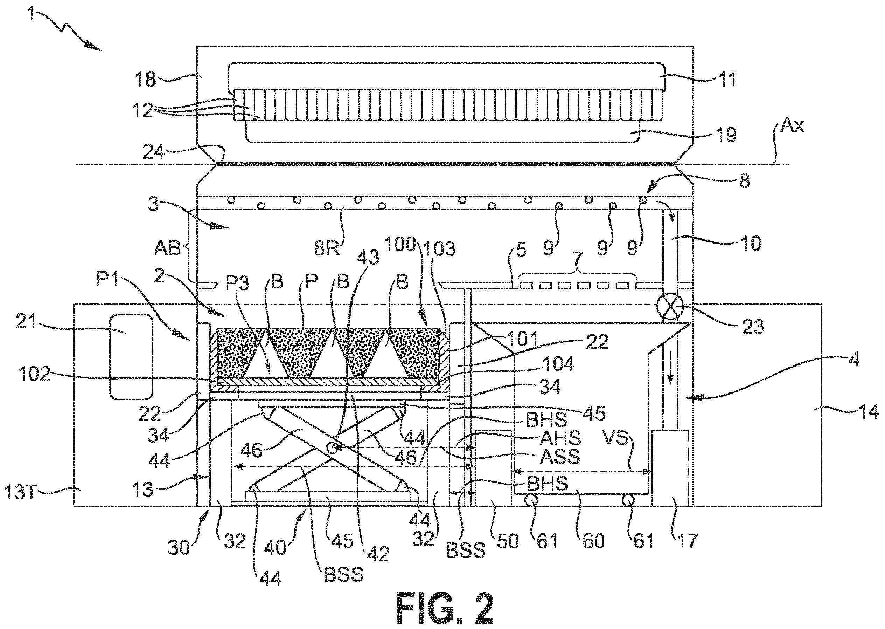

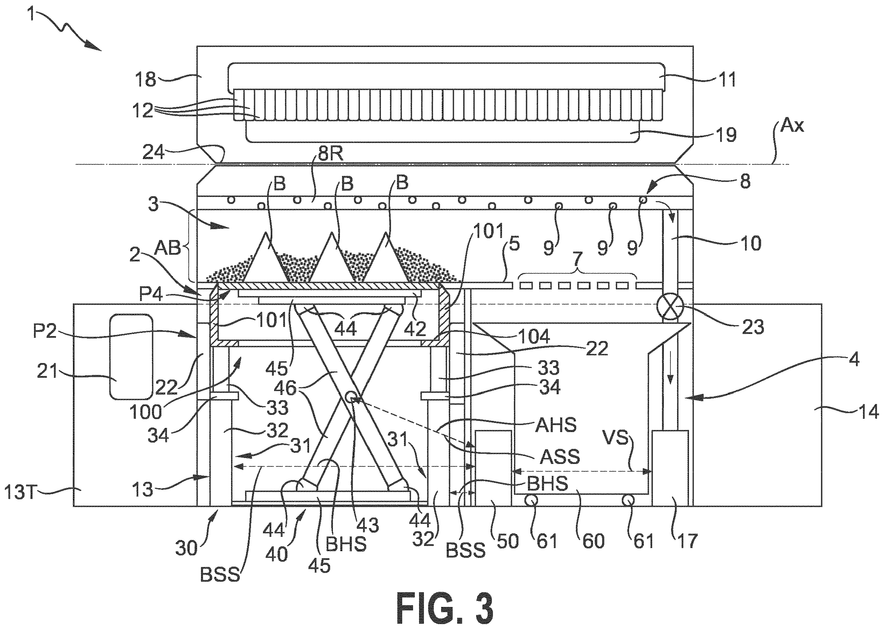

In den Figuren 2 und 3 ist zu erkennen, dass die Auspackvorrichtung 1 eine Aufnahmekammer 2 (in den Figuren jeweils links unten) aufweist, in die ein oder mehrere zu reinigende Bauteile B in einem Baubehälter 100 (auch "Wechselrahmen" 100 genannt) übergeben werden können.

Der in einer Draufsicht im Wesentlichen rechteckige Baubehälter 100 weist eine umlaufende Baubehälterwand 101 auf, die im Querschnitt als eine Art L-Profil ausgebildet ist. Der kurze Schenkel dieses L-Profils der Baubehälterwand 101 befindet sich am unteren Ende der Baubehälterwand 101 und erstreckt sich unter Bildung eines umlaufenden Kragens nach Innen. Auf dem kurzen Schenkel der Baubehälterwand 101 bzw. dem Kragen liegt eine in der Baubehälterwand 101 bewegliche Aufbauplattform 102 obenseitig auf, welche somit einen höhenverschiebbaren Boden des Baubehälters 100 bildet. Dieser Bereich oder Kragen auf dem die Aufbauplattform 102 aufliegt, wird im Folgenden auch als unterer Rand 104 des Baubehälters 100 bezeichnet. Auf dieser Aufbauplattform 102 wurden in der Fertigungsvorrichtung die Bauteile in einem additiven Fertigungsprozess aufgebaut, wobei pulverförmiges Aufbaumaterial P (im Folgenden auch Pulver P genannt) jeweils unter schrittweisem Absenken der Aufbauplattform 102 schichtweise aufgetragen und selektiv verfestigt wurde. Der Baubehälter 100 ist daher zumindest bis zum oberen Ende des höchsten Bauteils B mit Pulver P befüllt. Dieses Pulver P muss zum Auspacken der Bauteile B entfernt werden.

Hierzu weist die Auspackvorrichtung 1 eine oberhalb der Aufnahmekammer 2 befindliche Auspackkammer 3 auf, in der die in der Aufnahmekammer 2 aufgenommenen Bauteile B ausgepackt werden können.

Diese Auspackkammer 3 weist hier eine Abdeckhaube 18 auf, die über ein Scharnier 24 mit einem oberen Rand des Rahmens der Auspackkammer 3 verbunden ist. Mit Hilfe von Griffen 16 kann die Abdeckhaube 18 um ihre Schwenkachse Ax entlang des Scharniers 24 nach oben geschwenkt und geöffnet und wieder herunter geschwenkt und geschlossen werden.

Unterhalb der Auspackkammer 3 und neben der Aufnahmekammer 2 befindet sich eine Rest-Pulverkammer 4, in der die von den Bauteilen B entfernten nicht verfestigten Baumaterialrückstände P bzw. das Pulver P gesammelt werden. Über eine horizontale Trennwand 5, die sich im Wesentlichen über die gesamte Innenlänge bzw. Haupterstreckung der Auspackvorrichtung 1 erstreckt, werden die Aufnahmekammer 2 und die Rest-Pulverkammer 4 von der Auspackkammer 3 getrennt.

Ein Baubehälter 100 kann aufgrund seines unter Umständen sehr hohen Gewichts beispielsweise mittels eines Handhabungsgeräts (hier nicht dargestellt) bzw. Hubvorrichtung, z .B. einem Gabelstapler, an die Auspackvorrichtung 1 übergeben werden. Hierzu weist die Aufnahmekammer 2 vorne eine verschließbare Ladeöffnung 13, mit Türen 13T und Griffen 15 auf (siehe Figur 1). Um den Baubehälter 100 dabei leicht und exakt positionieren zu können, weist die Aufnahmekammer 2 an den Innenseiten der Türen 13T Zentrierelemente 21 und an den inneren Seitenwänden der Auspackvorrichtung seitlich und hinten (hier nicht dargestellt) Zentrierelemente 22 auf. Somit wird der Baubehälter 100 beim reinschieben zunächst seitlich von den Zentrierelementen 22 zentriert, die sich an den inneren seitlichen Wänden der Aufnahmekammer 2 befinden. Daraufhin wird der Baubehälter 100 nach hinten zentriert durch die Zentrierelemente 22, die sich an den inneren hinteren Wänden der Aufnahmekammer 2 befinden. Beim Schließen der Türen 13T wird der Baubehälter 100 schließlich durch die Zentrierelemente 21 nach vorne hin zentriert. Die Zentrierelemente können dabei z. B. aus Hart-Kunststoff Kissen oder dergleichen bestehen.

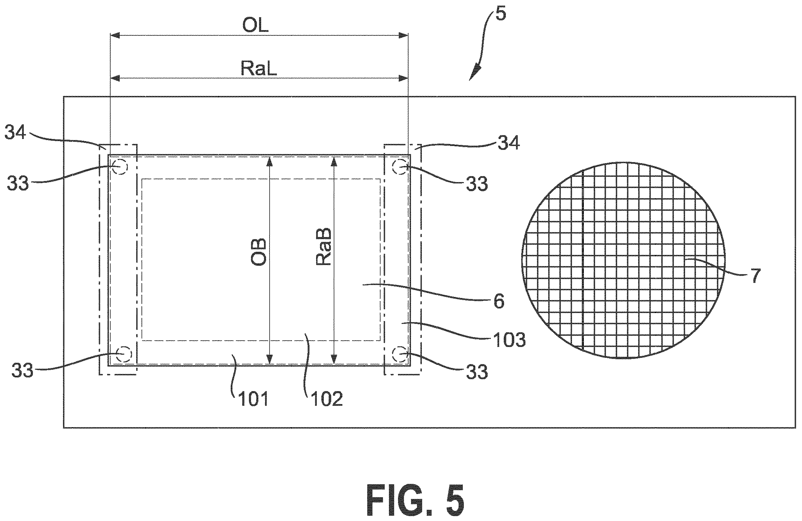

Ein an die Aufnahmekammer 2 übergebener Baubehälter 100 wird in der Aufnahmekammer 2 von einer höhenverstellbaren Baubehälter-Hubeinrichtung 30 getragen. Diese Baubehälter-Hubeinrichtung 30 umfasst mehrere Hubzylinder 31, hier konkret vier Hydraulikstempel 31 (in den Figuren 2 und 3 sind aufgrund der Frontansicht nur die beiden vorderen Hubzylinder sichtbar, in der Figur 5 sind alle vier Hubzylinder symbolisiert), auf denen der Baubehälter 100 mit seinen vier Eckbereichen aufliegt. Ein Hydraulikstempel 31 weist dabei ein Zylindergehäuse 32 und einen darin höhenverstellbaren Kolben 33 (welcher auch mehrstufig sein könnte) auf. In der Position, in der der Baubehälter 100 aufgenommen wird, befindet sich die Baubehälter-Hubeinrichtung 30 in einer Baubehälter-Aufnahmeposition P1, wie in Figur 2 gezeigt. In Figur 2 befindet sich auch die Aufbauplattform-Hubeinrichtung 40 in einer Aufbauplattform-Ausgangsposition P3, in der sie im Wesentlichen in einer Ebene mit den obenseitigen Auflageflächen 34 der Hubzylinder 31 der Baubehälter-Hubeinrichtung 30 angeordnet ist und somit die Aufbauplattform 102 noch nicht direkt kontaktiert.

Die Aufbauplattform-Hubeinrichtung 40 umfasst hier einen Hubtisch 41 mit einer Hubschere mit zwei an einer Scherenachse 43 miteinander gelenkig verbundenen Hebeln bzw. Schenkeln 46. An ihren Enden weisen die Schenkel 46 Lagerbolzen 44 auf, die in einer Gleitschiene 45 verschoben werden können. Zwei der Lagerbolzen 44, hier rechts oben und rechts unten, lassen sich dabei feststellen (Festlager), so dass sich nur die jeweils horizontal gegenüberliegenden Lagerbolzen 44 verschieben lassen (Loslager). Auf der oberen Gleitschiene 45 befindet sich eine Auflageplatte 42 auf der die Aufbauplattform 102 aufliegt. Die Aufbauplattform-Hubeinrichtung 40 kann aber zur Lastverteilung auch weitere Hubscheren umfassen. Die Hubscheren sind dann bevorzugt parallel zu einander angeordnet, weisen dieselbe (virtuelle) Schwenkachse auf und sind parallel verfahrbar. Aufgrund ihrer Anordnung wäre aber nur eine Hubschere in den Figuren 2 und 3 zu erkennen, da zusätzliche Hubscheren von einer ersten Hubschere verdeckt wären.

Soll nun der Baubehälter 100 nach oben verfahren werden, werden die Türen 13T sowie die Abdeckhaube 18, wie in Figur 1, gezeigt verschlossen.

Zwischen der Abdeckhaube 18 und den Türen 13T der Aufnahmekammer 2 und den Türen 14 der Rest-Pulverkammer 4 erstreckt sich horizontal vorne am Gehäuse der Auspackvorrichtung 1 ein Bereich, auf welchem eine Benutzerschnittstelle 80 angeordnet ist (nur in Figur 1 eingezeichnet). Diese Benutzerschnittstelle 80 umfasst hier drei Bedienschnittstellen bzw. Bedienelemente a, b, c in Form von Druckknöpfen a, b, c.

Werden die beiden äußeren Druckknöpfe a, c betätigt und sind die Türen 13T verschlossen, so werden Hebe-Steuerbefehle HS an eine Steuereinrichtung 50 gesendet, die in Figur 1 nur als gestrichelte Linie dargestellt ist, da sie sich im Gehäuse der Auspackvorrichtung 1 befindet. Um festzustellen, ob die Türen 13T verschlossen sind, weisen die Türen 13T jeweils einen Sensor 20 (von denen hier nur einer dargestellt ist) auf, der mit der Steuereinrichtung 50 elektrisch und/oder hydraulisch und/oder pneumatisch verbunden ist.

Erhält die Steuereinrichtung 50 die erforderlichen Hebe-Steuerbefehle HS so sendet sie ein Steuersignal BHS bzw. ein Baubehälter-Hebe-Steuersignal BHS an die Baubehälter-Hubeinrichtung 30. Durch das Steuersignal BHS wird der auf der Baubehälter-Hubeinrichtung 30 befindliche Baubehälter 100 von der Baubehälter-Aufnahmeposition P1 in eine Baubehälter-Auspackposition P2 verfahren.

Befindet sich der Baubehälter 100 dann in der Baubehälter-Auspackposition P2, so liegt eine äußere Oberkante 103 der umlaufenden Baubehälterwand 101 auf einer Ebene mit einer Oberseite der Trennwand 5, wie dies in Figur 3 zu erkennen ist. Dies wird durch eine entsprechend angepasste Höheneinstellung der Hubzylinder 31 realisiert.

Die Baubehälterwand 101 ist hier nach oben hin, d. h. in Richtung ihrer oberen Kante 103 verjüngt bzw. verläuft konisch. Hierbei sind die äußeren oberen Kanten (in Richtung der Oberkante 103) der Baubehälterwand 101 abschrägt.

Die Aufbauplattform 102 wird dann in die Aufbauplattform-Auspack-Endposition P4, also im Wesentlichen so weit nach oben gefahren, dass eine Auflagefläche, auf der die auszupackenden Bauteile B aufliegen, ebenfalls bündig mit einer oberen Kante der Trennwand 5 abschließt bzw. soweit bis ein Benutzer die Bauteile B auspacken kann. Dabei liegt die Aufbauplattform 102 mittig in einer Übergabeöffnung 6 der Trennwand 5.

Die Figur 5 zeigt hierzu eine Draufsicht der Trennwand 5, mit einem Siebbereich 7 oberhalb der Rest-Pulverkammer 4 (siehe hierzu auch im Schnitt die Figuren 2 und 3), hier konkret einem kreisförmigen Sieb 7 auf der rechten Seite und der Übergabeöffnung 6 zur Aufnahmekammer 2 auf der linken Seite. Die Aufbauplattform 102 befindet sich dabei direkt in der Übergabeöffnung 6.

In gestrichelten Linien wurde hier die umlaufende Baubehälterwand 101 sowie in gepunkteten Kreisen die Kolben 33 der Baubehälter-Hubeinrichtung 30 eingezeichnet. Die Baubehälterwand 101 liegt dabei, wie in den Figuren 1 und 2 mit ihren kürzeren Rahmenwänden links und rechts jeweils an den Ecken auf der Baubehälter-Hubeinrichtung 30 auf. Zudem sind hier die zwei parallel entlang der kurzen Seiten des Baubehälters 100 verlaufende Auflageflächen 34 bzw. Auflageschienen 34 durch die strichpunktierten Linien angedeutet, die jeweils die Zylindergehäuse 32 der zwei Hydraulikstempel 31 auf einer kurzen Seite des Baubehälters 100 an ihrem oberen Rand untereinander verbinden und so zusätzlich für Stabilität der Baubehälter-Hubeinrichtung 30 sorgen. Auf diese Auflageschienen 34 kann der Baubehälter 100 zur Übergabe in die Auspackvorrichtung 1 einfach aufgeschoben werden. In dieser Position befindet sich die Oberseite der Auflageplatte 42 des Hubtisches 41 in einer Flucht mit den Auflageschienen 34, d.h. in einem kurzen Abstand unterhalb der Aufbauplattform 102. Der Baubehälter 100 wird dann beim Hochfahren automatisch an den Ecken von den vier Kolben 33 der Hydraulikstempel 31 getragen, die durch die Auflageschienen 34 hindurchreichen.

In der Baubehälter-Auspackposition P2 ist der Baubehälter 100 wie erwähnt in die Übergabeöffnung 6 hineingefahren und die Oberkante 103 der Baubehälterwand 102 schließt dabei bündig mit der Oberseite der Trennwand 5 ab. Die Abmessungen der Übergabeöffnung 6 sind dabei so gewählt, dass sie an die (vorgegebenen) Abmessungen der Baubehälterwand 101 eines aufzunehmenden Baubehälters 100 angepasst sind.

Eine maximale Seitenlänge OL der Übergabeöffnung 6 ist hier im Wesentlichen (einschließlich Passtoleranzen) so groß wie eine maximale äußere Seitenlänge RaL eines definierten Rahmenaußenmaßes betrachtet von der Oberkante 103 der umlaufenden Baubehälterwand 101. Die kleinste Seitenlänge OB der Übergabeöffnung 6 ist hier im Wesentlichen (einschließlich Passtoleranzen) so groß wie eine kleinste äußere Seitenlänge RaB eines definierten Rahmenaußenmaßes, betrachtet von der Oberkante 103 der umlaufenden Baubehälterwand 101. Durch diese Abmaße kann der Baubehälter 100 in die Übergabeöffnung 6 eingefahren werden, wobei ein oberer Abschnitt der äußeren Seitenwände der Baubehälterwand 101 vollständig von der Trennwand 5 umschlossen ist. Hierdurch kann kein Pulver P über die Baubehälterwand 101 aus dem Baubehälter 100 in die Aufnahmekammer 2 herausfallen.

Ist der Baubehälter 100 bis zur äußeren Oberkante 103 der Baubehälterwand 101 gefüllt, wie dies in den Figuren 2 und 3 gezeigt ist, so ist es besonders von Vorteil, wenn die äußeren Abmaße der Baubehälterwand 101, denen der Übergabeöffnung 6 entsprechen und der Baubehälter 100 (wie oben beschrieben) in die Übergabeöffnung 6 der Trennwand 5 einfährt. So wird auch vermieden, dass eventuell Pulver P, auf der äußeren Oberkante 103 der oberen Baubehälterwand 101 aufliegt und zwischen der äußeren Oberkante 103 und der Trennwand 5 gepresst wird.

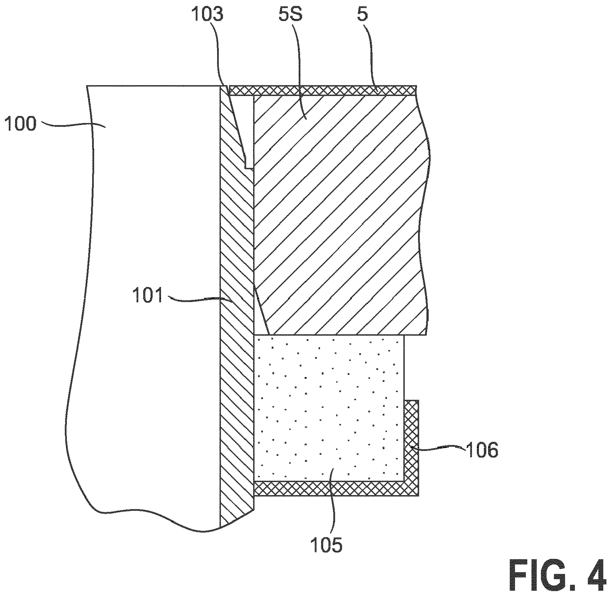

Damit der Baubehälter 100 möglichst einfach in die Übergabeöffnung 6 der Trennwand 5 eingeschoben werden kann, ist die Baubehälterwand 101 des Baubehälters 100, wie bereits erwähnt, nach oben hin verjüngt bzw. konisch. D. h. eine obere äußere Kante der Baubehälterwand 101 ist hier abgeschrägt, wie dies in dem Ausschnitt in der Figur 4 zu sehen ist. Zudem weist die Auspackvorrichtung 1 hier eine unterhalb der Trennwand 5 befindliche Einschubschiene 5S auf (in den Figuren 2 und 3 zur besseren Übersicht nichtdargestellt). Mittels dieser Einschubschiene 5S kann der Baubehälter 100 zusätzlich zentriert werden, um ein passgenaues einfahren der Baubehälterwand 101 in die Übergabeöffnung 6 zu vereinfachen bzw. zu erleichtern. Dazu ist eine untere zur Baubehälterwand 101 hinweisende Kante abgeschrägt, d. h. die Einschubschiene 5S weist eine zur konischen Ausgestaltung der Baubehälter-Oberkante passende, konische Form auf.

Eine zusätzliche Absicherung, dass kein unverfestigtes Baumaterial bzw. Pulverstaub in die Aufnahmekammer 2 der Auspackvorrichtung 1 gelangen kann (neben der Ausrichtung des Baubehälters 100 in der Übergabeöffnung 6 während der Baubehälter-Auspackposition P2 und der zeitlich koordinierten Bewegung der Baubehälterwand 101 und der Aufbauplattform 102) ist hier eine um die Baubehälterwand 101 umlaufende Dichtung 105. Befindet sich die Baubehälterwand 101 in der Baubehälter-Auspackposition P2 des Baubehälters 100 so stößt eine Oberseite der Dichtung 105 an eine Unterseite der Einschubschiene 5S an. Die Dichtung 105 kann dabei beispielsweise an die Außenseiten der Baubehälterwand 101 fixiert, z.B. geklebt, sein. Zusätzlichen Halt erfährt sie hier (siehe Figur 4) durch einen von den Außenseiten der Baubehälterwand 101 sich nach außen erstreckenden, nach oben offenen, in etwa rechtwinkligen Halterahmen 106, welcher außen ringförmig um die Baubehälterwand 101 verläuft und an dieser befestigt ist, wobei die Dichtung 105 in diesem Halterahmen 106 liegt. Um eine optimale und gleichmäßige Dichtwirkung zu erzielen, kann die Dichtung federnd gegen die Einschubschiene 5S gedrückt werden.

Ist die Baubehälter-Hubeinrichtung 30 in der Baubehälter-Auspackposition P2 angekommen, so sendet die Steuereinrichtung 50 hier ein Steuersignal AHS, bzw. ein Aufbauplattform-Hebe-Steuersignal AHS an die Aufbauplattform-Hubeinrichtung 40. Ob die Baubehälter-Hubeinrichtung 30 die Baubehälter-Auspackposition P2 erreicht hat, kann über einen Endschalter überprüft werden (hier nicht eingezeichnet). Durch das Steuersignal AHS wird dann zeitlich koordiniert die Aufbauplattform 102 des Baubehälters 100 mittels der Aufbauplattform-Hubeinrichtung 40 von der Aufbauplattform-Aufnahmeposition P3 in eine Aufbauplattform-Auspack-Endposition P4 verfahren. Befindet sich die Baubehälter-Hubeinrichtung 30 in einer Baubehälter-Auspackposition P2 und die Aufbauplattform-Hubeinrichtung 40 in der Aufbauplattform-Auspack-Endposition P4 so liegen die zu reinigenden Bauteile B auf der Aufbauplattform 102 in einem Auspackbereich AB der Auspackkammer 3, wie dies in Figur 3 gezeigt ist.

Die Baubehälter-Hubeinrichtung 30 und die Aufbauplattform-Hubeinrichtung 40 können aber auch mittels eines gemeinsamen Steuersignals zeitlich koordiniert verfahren werden, wie dies später noch genauer erläutert wird.

Damit ein Benutzer ein Bauteil B auspacken und reinigen kann ohne die Abdeckhaube 18 zu öffnen, weist die Abdeckhaube 18 hier einen Eingriffsbereich 11 mit Lamellen 12 auf, durch die ein Benutzer hindurchgreifen kann. Die Lamellen halten das Pulver P und Pulverstaub aus der Auspackkammer 3 während des Auspackprozesses weitgehend zurück. Zieht der Benutzer seine Hände durch den Eingriffsschutz 11 heraus, so können die Lamellen 12 zusätzlich das Pulver P von den Händen abstreifen. Damit ein Benutzer in die Auspackkammer 3 hineinschauen kann, weist hier die Abdeckhaube 18 ein Fenster 19 auf.

Durch das Auspacken kommt es meist zum Aufwirbeln von Pulverstaub. Dieser entstehende Pulverstaub kann mittels einer Absaugeinrichtung 8 entfernt werden. Die Absaugeinrichtung 8 weist ein Saugrohr 8R oberhalb des Auspackbereichs AB auf, das sich horizontal im Wesentlichen über eine gesamte Länge der Auspackkammer 3 erstreckt. Der Pulverstaub kann damit über eine Vielzahl, hier konkret zwanzig Absaug-Öffnungen 9 im Saugrohr 8R, eingesaugt werden. Die Absaug-Öffnungen 9 sind dabei weitestgehend gleichmäßig entlang der Längs- bzw. Haupterstreckung der Absaugeinrichtung 8 verteilt. Der Pulverstaub wird bei dem dargestellten Beispiel über eine Pumpe 17 der Auspackvorrichtung 1 angesogen, welche über eine Leitung 10 mit dem Saugrohr 8R der Absaugeinrichtung 8 verbunden ist. Die Pumpe 17 ist zudem mit der Steuereinrichtung 50 elektrisch verbunden und kann von dieser mit einem Pumpen-Steuersignal VS angesteuert werden. Alternativ ist auch eine Absaugung über einen externen Sauganschluss, z.B. eine Staubsaugers oder einer Haus-Absauganlage, möglich (nicht dargestellt).

Die Auspackvorrichtung 1 könnte aber alternativ oder zusätzlich z. B auch einen oder mehrere flexible Saugrüssel in der Auspackkammer 3 aufweisen, um Pulver abzusaugen.

Der Hauptteil der nicht verfestigten Baumaterialrückstände P wird über das Sieb 7 in der Trennwand 5 nach unten in die Rest-Pulverkammer 4 befördert. Das Sieb 7 kann nach Bedarf aus der Trennwand 5 herausgenommen werden, um es beispielsweise austauschen zu können oder zu reinigen. In der Rest-Pulverkammer 4 werden hier die nicht verfestigten Baumaterialrückstände P in einer unterhalb des Siebs 7 befindlichen Pulver-Aufnahmebox 60 aufgefangen und gesammelt. Das mit der Ansaugeinrichtung 8 angesaugte Pulver P kann ebenfalls in die Pulver-Aufnahmebox 60 abgegeben werden. Dabei wird das angesaugte Pulver P durch einen Abscheider 23 in der Leitung 10 von der ebenfalls angesaugten Luft getrennt und der Pulver-Aufnahmebox 60 zugeführt.

Erreicht die Pulver-Aufnahmebox 60 einen definierten Füllgrad, so können Türen 14 der Rest-Pulverkammer 4 geöffnet werden und die hier mit Rollen 61 versehende Pulver-Aufnahmebox 60, kann aus der Rest-Pulverkammer 4 herausgerollt werden. Die Pulver-Aufnahmebox 60 kann dann z.B. zu einer Vorrichtung zur additiven Fertigung von Bauteilen B gefahren werden. Dort kann das Pulver P bei Bedarf weiter aufgearbeitet und einer Pulverkammer zugeführt werden. Hierdurch kann das Pulver P dann leicht bei einem neuen Baujob wiederverwendet werden. Alternative kann aber auch eine Förderung zum Pulverabtransport verwendet werden, wobei eine Pulverpumpe verwendet wird, die direkt das gesiebte Pulver P in eine Box für eine Fertigungsvorrichtung befördert.

Das ausgepackte Bauteil B kann dann aus der Auspackkammer 3 entnommen werden. Alternativ kann das Bauteil B aber auch in dem ansonsten leeren Baubehälter 100 wieder abgesenkt werden und mit dem Baubehälter 100 aus der Aufnahmekammer 2 herausgenommen werden. Dazu betätigt ein Benutzer das dritte Bedienelement b wodurch ein Senk-Steuerbefehl SS an die Steuereinrichtung 50 gesendet wird. Die Steuereinrichtung 50 sendet wiederum nach Eingang des Senk-Steuerbefehls SS ein Aufbauplattform-Senk-Steuersignal ASS an die Aufbauplattform-Hubeinrichtung 40, um die Aufbauplattform 102 eines auf der Baubehälter-Hubeinrichtung 30 befindlichen Baubehälters 100 mittels der Aufbauplattform-Hubeinrichtung 40 von der Aufbauplattform-Auspackposition P4 in die Aufbauplattform-Ausgangsposition P3 zu verfahren. Befindet sich die Aufbauplattform 102 wieder in der Aufbauplattform-Ausgangsposition P3, so sendet die Steuereinrichtung 50 ein Baubehälter-Senk-Steuersignal BSS an die Baubehälter-Hubeinrichtung 30, um automatisch den Baubehälter 100 von der Baubehälter-Auspackposition P2 in die Baubehälter-Aufnahmeposition P1 zurück zu verfahren.

Auch hier könnte die Baubehälter-Hubeinrichtung 30 und die Aufbauplattform-Hubeinrichtung 40 mittels nur eines gemeinsamen Senk-Steuersignals, zeitlich koordiniert in die Baubehälter-Aufnahmeposition P1 eines Baubehälters 100 bzw. in die Aufbauplattform-Ausgangsposition P3 verfahren werden, was später noch genauer beschrieben wird.

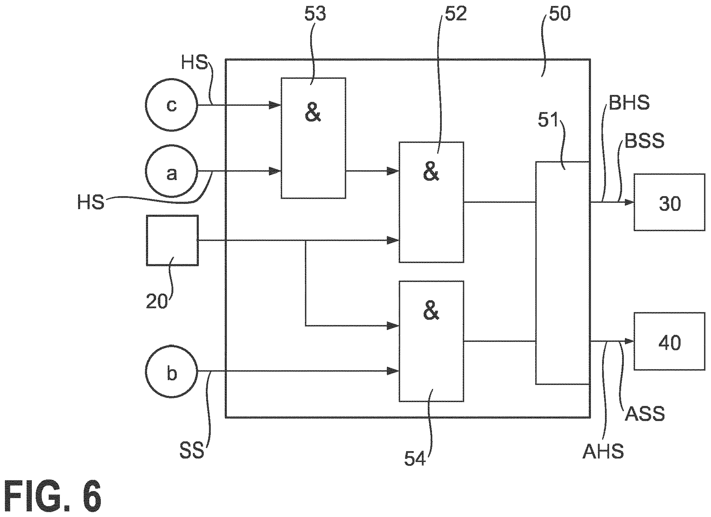

In Figur 6 ist in einem Blockschaltbild für eine einfache Schaltung (hier realisiert in der Steuereinrichtung 50) gezeigt, mit der ein Baubehälter-Hebe-Steuersignal BHS an die Baubehälter-Hubeinrichtung 30 und ein Aufbauplattform-Hebe-Steuersignal AHS an die Aufbauplattform-Hubeinrichtung 40 übermittelt werden können, wobei automatisch erforderliche Bedingungen, nämlich die gleichzeitige Betätigung zweier räumlich getrennter Druckknöpfe a, c und das Schließen der Türen 13T eingehalten werden müssen, und mit der ein Baubehälter-Senk-Steuersignal BSS an die Baubehälter-Hubeinrichtung 30 und ein Aufbauplattform-Senk-Steuersignal ASS an die Aufbauplattform-Hubeinrichtung 40 übermittelt werden können.

Als eine erste Bedingung, um ein Baubehälter-Hebe-Steuersignal BHS an die Baubehälter-Hubeinrichtung 30 und ein Aufbauplattform-Hebe-Steuersignal AHS an die Aufbauplattform-Hubeinrichtung 40 zu übermitteln, werden das erste Bedienelement a und das räumlich von diesem getrennte zweite Bedienelement c zur gleichen Zeit betätigt und senden jeweils ihren Hebesteuerbefehl HS aus. Dieser Zustand kann durch ein UND-Gatter 53 als eine Verknüpfung beider Eingangssignale in der Steuereinrichtung 50 veranschaulicht bzw. realisiert werden. Sind beide Bedienelemente a, c gedrückt, also werden beide Hebesteuerbefehle HS zeitgleich erzeugt, so ist der Zustand "wahr" bzw. "zutreffend". An beiden Eingängen des UND-Gatters 53 liegt dann eine 1 an, was am Ausgang des UND-Gatters 53 auch eine 1 liefert. Wird keines oder nur eines der Bedienelemente a, c gedrückt, so nimmt nur ein Eingang der Verknüpfung oder gar kein Eingang der Verknüpfung den Wert 1 an. Dadurch nimmt auch der Ausgang nicht den Wert 1 an.

Eine weitere Bedingung damit ein Baubehälter-Hebe-Steuersignal BHS an die Baubehälter-Hubeinrichtung 30 und ein Aufbauplattform-Hebe-Steuersignal AHS an die Aufbauplattform-Hubeinrichtung 40 übermittelt wird, ist hier dass die Türen 13T der Auspackvorrichtung 1 geschlossen sind. Um dies zu überprüfen weisen die Türen 13T, wie bereits erwähnt, einen Sensor 20, beispielsweise hier einen Pneumatiktaster, auf, dessen Zustand von einem Eingang eines weiteren UND-Gatters 52 erfasst wird, dessen anderer Eingang an den Ausgang des ersten UND-Gatters 53 angeschlossen ist. Werden das erste Bedienelement a und das zweite Bedienelement c zur gleichen Zeit betätigt und sind die Türen 13T verschlossen, so gilt auch hier der Ausgangs-Zustand des weiteren UND-Gatters 52 als "wahr" bzw. "zutreffend". Das heißt, dass der Ausgang des UND-Gatters 53 eine 1 annimmt und somit ein Eingang der Schaltung des UND-Gatters 52 den Wert 1 annimmt und der zweite Eingang den Wert 1 annimmt, da die Türen 13 T geschlossen sind. Hierdurch liefert die Schaltung des UND-Gatters 52 eine 1 an ihrem Ausgang. Würde eines der beiden ersten und räumlich voneinander getrennten Bedienelemente a, c nicht zeitgleich betätigt werden, also wenn nicht alle erforderlichen Hebesteuerbefehle HS zeitgleich anliegen, oder die Türen 13T wären nicht geschlossen, so würde die Schaltung des UND-Gatters 52 eine 0 liefern.

Zudem weist die Steuereinrichtung 50 ein drittes UND-Gatter 54 auf, welches elektronisch mit dem dritten Bedienelement b und mit dem Sensor 20 der Türen 13T verbunden ist. Das Bedienelement b kann, wie bereits erwähnt, betätigt werden, wenn die Baubehälter-Hubeinrichtung 30 und die Aufbauplattform-Hubeinrichtung 40 abgesenkt werden soll. Hierdurch wird also auch nur dann ein Baubehälter-Senk-Steuersignal BSS an die Baubehälter-Hubeinrichtung 30 und ein Aufbauplattform-Senk-Steuersignal ASS an die Aufbauplattform-Hubeinrichtung 40 übermittelt, wenn die Türen 13T der Auspackvorrichtung 1 geschlossen sind. Dies kann mittels des dritten UND-Gatters 54 überprüft werden. Wird das dritte Bedienelement b betätigt und sind die Türen 13T verschlossen, so gilt auch hier der Zustand als "wahr" bzw. "zutreffend". Das heißt, dass ein Eingang des UND-Gatters 54 den Wert 1 annimmt und der zweite Eingang den Wert 1 annimmt, da die Türen 13T geschlossen sind. Hierdurch liefert die Verknüpfung des UND-Gatters 54 eine 1 an ihrem Ausgang.

In einer Auswerteeinrichtung 51 der Steuereinrichtung 50 werden dann die eingehenden Signale ermittelt, überprüft und entsprechend umgewandelt. Daraufhin wird entweder kein Signal an die Baubehälter-Hubeinrichtung 30 und die Aufbauplattform-Hubeinrichtung 40 übermittelt, es wird zeitlich koordiniert, z.B. zeitlich passend verzögert, ein Baubehälter-Hebe-Steuersignal BHS an die Baubehälter-Hubeinrichtung 30 und ein Aufbauplattform-Hebe-Steuersignal AHS an die Aufbauplattform-Hubeinrichtung 40 übermittelt oder es wird ein Baubehälter-Senk-Steuersignal BSS an die Baubehälter-Hubeinrichtung 30 und ein Aufbauplattform-Senk-Steuersignal ASS an die Aufbauplattform-Hubeinrichtung 40 übermittelt. Diese Signale können z.B. elektrische Signale sein, welche entsprechende Elektromotoren ansteuern.

Die oben beschriebene Ansteuerung der Aufbauplattform-Hubeinrichtung 40 und Baubehälter-Hubeinrichtung 30 erfolgt überwiegend elektronisch bzw. elektrisch. Sie kann zum großen Teil auch softwaretechnisch realisiert werden, beispielsweise indem die Gatter durch entsprechende Abfragen in Softwaremodulen realisiert werden.

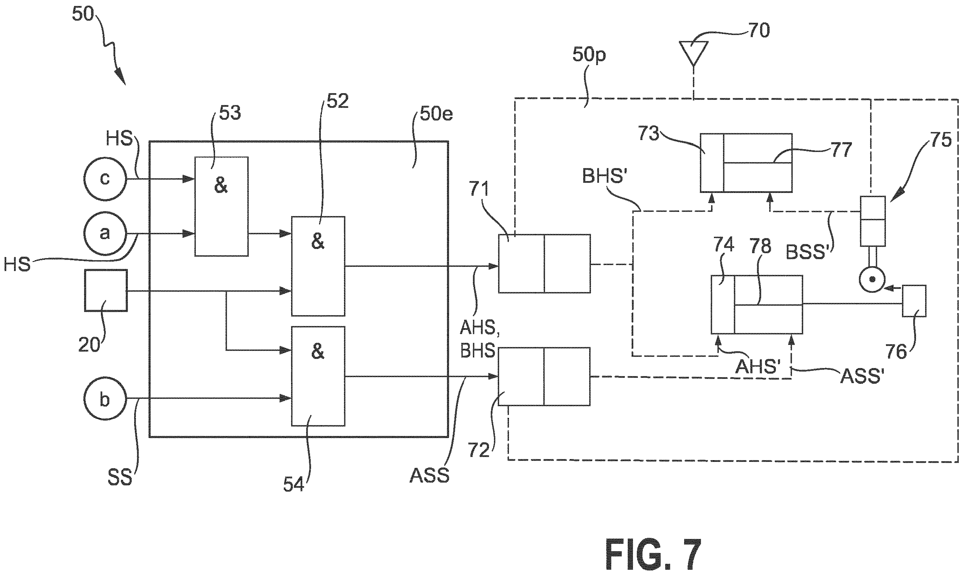

In einer weiteren bevorzugten und in der Figur 7 grob schematisch gezeigten Ausführung einer Steuereinrichtung 50, erfolgt die Ansteuerung bzw. der Antrieb der Aufbauplattform-Hubeinrichtung 40 und Baubehälter-Hubeinrichtung 30 nicht nur softwareseitig bzw. elektrisch oder elektronisch sondern zu einem großen Teil auch durch pneumatische Steuerelemente. Die Steuereinrichtung 50 weist hierzu einen elektrischen bzw. elektronischen Teil 50e und einen pneumatischen Teil 50p auf. Es wird aber explizit darauf hingewiesen, dass grundsätzlich auch weitere Steuerungsteile, d.h. auch der in Figur 7 gezeigte elektrische bzw. elektronische Teil 50e, insbesondere also die gesamte Steuerungseinrichtung, durch pneumatische und/oder hydraulische Komponenten realisiert werden können.

In der Figur 7 entspricht der elektrische bzw. elektronische Teil 50e der Steuereinrichtung 50 bis auf die Auswerteeinrichtung 51 im Wesentlichen der Steuereinrichtung 50 aus Figur 6. Werden also beispielsweise das erste Bedienelement a und das zweite Bedienelement c zur gleichen Zeit betätigt und sind die Türen 13T verschlossen, so liefert das UND-Gatter 52, wie bereits beschrieben, eine 1 an ihrem Ausgang. Hierdurch wird ein Baubehälter-Hebe-Steuersignal BHS an die Baubehälter-Hubeinrichtung 30 und ein Aufbauplattform-Hebe-Steuersignal AHS an die Aufbauplattform-Hubeinrichtung 40 ausgesandt, wobei es sich bei dem Baubehälter-Hebe-Steuersignal BHS und dem Aufbauplattform-Hebe-Steuersignal AHS nicht um zwei verschiedene Hebe-Steuersignale handelt, sondern nur um ein einziges gemeinsames Hebe-Steuersignal.

Dieses Hebe-Steuersignal AHS, BHS wird hier an ein mit dem elektronischen bzw. elektrischen Teil 50e der Steuereinrichtung 50 verbundenes erstes Wegeventil 71 gesendet. Dieses erste Wegeventil 71, vorzugsweise ein 2/2-Wegeventil 71, ist mit einer Druckluftquelle 70 verbunden und wandelt das elektronische Hebe-Steuersignal AHS, BHS in ein pneumatisches Hebe-Steuersignal AHS', BHS' um.

Es sei an dieser Stelle darauf hingewiesen, dass anstelle von pneumatischen Komponenten mit Druckluft oder dergleichen auch entsprechende hydraulische Komponenten genutzt werden können, die mit einer Hydraulikflüssigkeit betrieben werden. Im Folgenden wird aber - ohne Beschränkung der Allgemeinheit - weiter von einem pneumatischen Aufbau als ein Beispiel ausgegangen.

Erhält nun das Wegeventil 71 das Hebe-Steuersignal AHS, BHS, so gibt dieses Ventil 71 den Weg für die Druckluft (wobei die Druckluftleitungen in der Figur 7 in gestrichelten Linien dargestellt sind) frei, mit der sie durch die Druckluftquelle 70 beaufschlagt wurde. Diese Druckluft lässt zeitgleich einen Kolben 77 eines Zylinders 73, vorzugsweise eines doppeltwirkenden Zylinders 73, der Baubehälter-Hubeinrichtung 30 und einen Kolben 78 eines Zylinders 74, vorzugsweise eines doppeltwirkenden Zylinders 74, der Aufbauplattform-Hubeinrichtung 40 ausfahren. Hierbei fährt die Baubehälter-Hubeinrichtung 30 vollständig aus, so dass der auf ihr befindliche Baubehälter 100 die Baubehälter-Auspackposition P2 erreicht. Die Aufbauplattform-Hubeinrichtung 40 startet zwar gleichzeitig mit der Baubehälter-Hubeinrichtung 30, kontaktiert aber konstruktionsbedingt die Aufbauplattform 102 erst, wenn der Baubehälter 100 die Baubehälter-Auspackposition P2 erreicht hat.

Dies wird unter anderem dadurch erreicht, dass die Aufbauplattform-Hubeinrichtung 40 hier einen Hubtisch 41 umfasst, in dem der Hubzylinder 74 schräg zur vertikalen Verfahrrichtung wirkt und somit einen längeren Verfahrweg aufweist, als die Baubehälter-Hubeinrichtung 30, die hier mittels vier direkt vertikal verfahrenden Hubzylindern 31 die Baubehälterwand 101 in die Baubehälter-Auspackposition P2 verfährt.

Die Aufbauplattform-Hubeinrichtung 40 fährt dabei beispielsweise solange nach oben, bis eines der für den Hebevorgang erforderlichen Bedienelemente a, c nicht mehr betätigt wird oder bis sie konstruktionsbedingt ihre Endposition erreicht.

Durch diese Konstruktion der Aufbauplattform-Hubeinrichtung 40 und der Baubehälter-Hubeinrichtung 30 ist es also möglich, mittels nur eines gemeinsamen Hebe-Steuersignals AHS, BHS einen zu entleerenden Baubehälter 100 in eine Baubehälter-Auspackposition P2 des Baubehälters zu verfahren und koordiniert, zeitlich verzögert dazu, die in der Baubehälterwand 101 befindliche Aufbauplattform 102 in die Aufbauplattform-Auspackposition zu verfahren.

Der Baubehälter 100 kann mithilfe der in Figur 7 gezeigten Steuereinrichtung 50 auch wieder in eine Baubehälter-Aufnahmeposition P1 wie folgt verfahren werden, um beispielsweise den entleerten Baubehälter 100 wieder zu entnehmen:
Wird dazu das dritte Bedienelement b betätigt und sind die Türen 13T verschlossen, so liefert das UND-Gatter 54, wie bereits beschrieben, eine 1 an ihrem Ausgang. Hierdurch wird nun ein elektronisches bzw. elektrisches Aufbauplattform-Senk-Steuersignal ASS an ein zweites Wegeventil 72 gesendet. Dieses zweite Wegeventil 72, vorzugsweise ein 2/2-Wegeventil 72, wird ebenfalls mit Druckluft durch die Druckluftquelle 70 beaufschlagt.

Erhält das zweite Wegeventil 72 das elektronische Aufbauplattform-Senk-Steuersignal ASS, so wandelt es dieses in ein hydraulisches Aufbauplattform-Senk-Steuersignal ASS' um und der Weg für die Druckluft wird freigegeben. Diese Druckluft fließt nun auf der der zum Hochfahren der Aufbauplattform 102 beaufschlagten entgegensetzen Seite ein. Hierdurch drückt nun die Druckluft in die entgegengesetzte Richtung des Zylinders 74 und die Aufbauplattform-Hubeinrichtung 40 verfährt wieder von der Aufbauplattform-Auspackposition P4 in eine Position in der die Aufbauplattform 102 sich in ihrer untersten Position im Baubehälter 100 befindet.

In dieser Position tangiert ein Kontaktelement 76 am Kolben 78 des Zylinders 74 ein Rollenhebelventil 75 und löst dieses aus bzw. schaltet dieses um. Sobald das Rollenhebelventil 75 ausgelöst würde, strömt Druckluft in den Zylinder 73 der Baubehälter-Hubeinrichtung 30 ein, wodurch der Zylinder ein (zum Aufbauplattform-Senk-Steuersignal ASS' verzögertes) pneumatisches Baubehälter-Senk-Steuersignal BSS' erhält. Die Druckluft strömt auch hier auf der der zum Hochfahren des Baubehälters 100 beaufschlagten entgegensetzen Seite ein. Das heißt der Zylinder 73 bzw. die Baubehälter-Hubeinrichtung 30 wird nun nach unten "gedrückt" bzw. die Baubehälter-Hubeinrichtung 30 verfährt nun stufenlos von der Baubehälter-Auspackposition P2 in die Baubehälter-Aufnahmeposition P1. Erst wenn sich die Baubehälter-Hubeinrichtung 30 wieder in der Baubehälter-Aufnahmeposition P1 befindet ist eine Entnahme des Baubehälters 100 inklusive der Aufbauplattform 102 möglich.

Es sei an dieser Stelle darauf hingewiesen, dass es sich bei der Darstellung der Ansteuerung in Figur 7 nur um eine sehr grob schematische Darstellung handelt und etwaige benötigte Komponenten zur Ansteuerung der Baubehälter-Hubeinrichtung 30 und Aufbauplattform-Hubeinrichtung 40 somit nicht dargestellt sind. So wurden beispielsweise auch keine Entlastungsventile dargestellt, die benötigt werden, um die Kolben 77, 78 der Zylinder 73, 74 der Hubeinrichtungen 30, 40 aus- und auch wieder einzufahren.

Außerdem ist zu erwähnen, das die oben beschriebenen Hebevorgänge sowie Senkvorgänge des Baubehälters 100 in der Auspackvorrichtung 1 sowie der Aufbauplattform 102 jederzeit gestoppt werden können, indem ein für den Hebevorgang und/oder Senkvorgang erforderliches Bedienelement a, b, c nicht mehr betätigt wird.

Es wird abschließend noch einmal darauf hingewiesen, dass es sich bei der vorhergehend detailliert beschriebenen Vorrichtungen und Verfahren lediglich um Ausführungsbeispiele handelt, welche vom Fachmann in verschiedenster Weise modifiziert werden können, ohne den Bereich der Erfindung zu verlassen. So ist oben dargestellt, dass die Überprüfung, ob alle Bedingungen erfüllt sind, um einen Baubehälter zu verfahren, innerhalb der Steuereinrichtung erfolgt. Diese Überprüfung kann beispielsweise, auch außerhalb einer Steuereinrichtung, z. B. in einer logischen Schaltung in oder an der Benutzerschnittstelle, erfolgen. Aber auch eine Kombination dieser Varianten ist möglich. Ebenso ist eine beliebige Kombination der o.g. Varianten von software- bzw. elektronisch und/oder elektrisch betriebenen Steuereinrichtungen und hydraulisch und/oder pneumatisch betriebenen Steuereinrichtungen möglich. Weiterhin schließt die Verwendung der unbestimmten Artikel "ein" bzw. "eine" nicht aus, dass die betreffenden Merkmale auch mehrfach vorhanden sein können.

### Bezugszeichenliste

1 Auspackvorrichtung
2 Aufnahmekammer
3 Auspackkammer
4 Rest-Pulverkammer
5 Trennwand
5S Einschubschiene
6 Übergabeöffnung/ Durchbruch
7 Siebbereich/ Siebanordnung/ Sieb
8 Absaugeinrichtung
8R Saugrohr
9 Absaug-Öffnung
10 Leitung
11 Eingriffsbereich
12 Lamellen
13 Ladeöffnungen
13T Türen
14 Türen
15, 16 Griffe
17 Pumpe
18 Abdeckhaube
19 Fenster
20 Sensor
21, 22 Zentrierelemente
23 Abscheider
24 Scharnier
30 Baubehälter-Hubeinrichtung
31 Hubzylinder / Hydraulikstempel/
32 Zylindergehäuse
33 Kolben
34 Auflageflächen
40 Aufbauplattform-Hubeinrichtung
41 Hubtisch
42 Auflageplatte
43 Scherenachse
44 Rollen
45 Gleitschiene
46 Schenkel / Hebel
50 Steuereinrichtung
50e Steuereinrichtung elektrisch/ elektronisch
50p Steuereinrichtung pneumatisch
51 Auswerteeinrichtung
52, 53, 54 UND-Gatter
60 Pulver-Aufnahmebox
61 Rollen
70 Druckluftquelle
71, 72 Wegeventil
73, 74 Zylinder
75 Rollenhebelventil
76 Kontaktelement
77, 78 Kolben
80 Benutzerschnittstelle
100 Baubehälter/ Wechselrahmen
101 Baubehälterwand
102 Aufbauplattform
103 äußere Oberkante
104 unterer Rand
105 Dichtung
106 Halterahmen
a, b, c Bedienelemente / Druckknöpfe
AB Auspackbereich
AHS, AHS' Steuersignal/ Aufbauplattform-Hebe-Steuersignal
ASS, ASS' Steuersignal/ Aufbauplattform-Senk-Steuersignal
Ax Achse
B Bauteil
BHS, BHS' Steuersignal/ Baubehälter-Hebe-Steuersignal
BSS, BSS' Steuersignal/ Baubehälter-Senk-Steuersignal
HS Hebe-Steuerbefehl
OB kleinste Seitenlänge
OL maximale Seitenlänge
P nicht verfestigtes Baumaterial / Pulver
P1 Baubehälter-Aufnahmeposition
P2 Baubehälter-Auspackposition
P3 Aufbauplattform-Ausgangsposition
P4 Aufbauplattform-Auspack-Endposition
RaB kleinste äußere Seitenlänge
RaL maximale äußere Seitenlänge
SS Senk-Steuerbefehl
VS Pumpen-Steuersignal

## Patentansprüche

1. Auspackvorrichtung (1) für einen Baubehälter (100) einer Vorrichtung zur additiven Fertigung von Fertigungsprodukten, welcher Baubehälter (100) eine umlaufende Baubehälterwand (101) und eine darin höhenverschiebbar gelagerte Aufbauplattform (102) aufweist,
wobei die Auspackvorrichtung (1) zumindest umfasst:
- eine Aufnahmekammer (2) zur Aufnahme eines Baubehälters (100),
- eine oberhalb der Aufnahmekammer (2) befindliche Auspackkammer (3),
- eine Trennwand (5) zwischen der Aufnahmekammer (2) und der Auspackkammer (3) mit einer Übergabeöffnung (6),
- eine in der Aufnahmekammer (2) befindliche Baubehälter-Hubeinrichtung (30), welche ausgebildet ist, um den Baubehälter (100) von einer Baubehälter-Aufnahmeposition (P1) in eine Baubehälter-Auspackposition (P2) zu verfahren,
- eine in der Aufnahmekammer (2) befindliche Aufbauplattform-Hubeinrichtung (40), welche ausgebildet ist, um die Aufbauplattform (102) von einer Aufbauplattform-Ausgangsposition (P3) in zumindest eine Aufbauplattform-Auspackposition (P4) zu verfahren,
- eine Steuereinrichtung (50), um zumindest ein Steuersignal (AHS, AHS', ASS, ASS', BHS, BHS', BSS, BSS') an die Baubehälter-Hubeinrichtung (30) und an die Aufbauplattform-Hubeinrichtung (40) auszugeben.

2. Auspackvorrichtung nach Anspruch 1, wobei die Auspackvorrichtung (1) eine Benutzerschnittstelle (80) aufweist, die mit der Steuereinrichtung (50) gekoppelt ist, um zumindest einen Hebe-Steuerbefehl (HS) oder zumindest einen Senk-Steuerbefehl (SS) an die Steuereinrichtung (50) auszugeben.

3. Auspackvorrichtung nach Anspruch 1 oder 2, wobei die Steuereinrichtung (50) ausgebildet ist, um bei Empfang eines oder mehrerer Hebe-Steuerbefehle (HS)
- ein Baubehälter-Hebe-Steuersignal (BHS, BHS') an die Baubehälter-Hubeinrichtung (30) zu senden, um einen auf der Baubehälter-Hubeinrichtung (30) befindlichen Baubehälter (100) von der Baubehälter-Aufnahmeposition (P1) in die Baubehälter-Auspackposition (P2) zu verfahren, und
- ein Aufbauplattform-Hebe-Steuersignal (AHS, AHS') an die Aufbauplattform-Hubeinrichtung (40) zu senden, um, vorzugsweise zeitlich verzögert, automatisch die Aufbauplattform (102) des Baubehälters (100) mittels der Aufbauplattform-Hubeinrichtung (40) von der Aufbauplattform-Ausgangsposition (P3) in eine Aufbauplattform-Auspackposition (P4) zu verfahren,
wobei bevorzugt die Steuereinrichtung (50) ausgebildet ist, um die Aufbauplattform (102) des Baubehälters (100) erst dann in die eine Aufbauplattform-Auspackposition (P4) zu verfahren, wenn der Baubehälter (100) die Baubehälter-Auspackposition (P2) im Wesentlichen erreicht hat.

4. Auspackvorrichtung nach einem der vorstehenden Ansprüche, wobei die Steuereinrichtung (50) ausgebildet ist, um bei Empfang eines oder mehrerer Senk-Steuerbefehle (SS)
- ein Aufbauplattform-Senk-Steuersignal (ASS, ASS') an die Aufbauplattform-Hubeinrichtung (40) zu senden, um die Aufbauplattform (102) eines auf der Baubehälter-Hubeinrichtung (30) befindlichen Baubehälters (100) mittels der Aufbauplattform-Hubeinrichtung (40) von einer Aufbauplattform-Auspackposition (P4) in die Aufbauplattform-Ausgangsposition (P3) zu verfahren, und
- ein Baubehälter-Senk-Steuersignal (BSS, BSS') an die Baubehälter-Hubeinrichtung (30) zu senden, um, vorzugsweise zeitlich verzögert, automatisch den Baubehälter (100) von der Baubehälter-Auspackposition (P2) in die Baubehälter-Aufnahmeposition (P1) zu verfahren,
wobei bevorzugt die Steuereinrichtung (50) ausgebildet ist, um den Baubehälter (100) erst dann von der Baubehälter-Auspackposition (P2) weg zu fahren, wenn die Aufbauplattform (102) des Baubehälters (100) zumindest bereits ein Stück weit im Baubehälter (100) nach unten gefahren ist.

5. Auspackvorrichtung nach einem der vorstehenden Ansprüche, wobei die Steuereinrichtung (50) und/oder die Benutzerschnittstelle (80) so ausgebildet sind, dass nur bei zeitlich miteinander abgestimmten Betätigungen zumindest zweier getrennter Bedienelemente (a, c) und/oder nur bei gleichzeitiger beidhändiger Betätigung der Benutzerschnittstelle (80) ein Hebe-Steuersignal (BHS, BHS', AHS, AHS'), insbesondere ein Baubehälter-Hebe-Steuersignal (BHS, BHS') und/oder ein Aufbauplattform-Hebe-Steuersignal (AHS, AHS'), ausgegeben wird.

6. Auspackvorrichtung nach einem der vorstehenden Ansprüche, wobei die Baubehälter-Hubeinrichtung (30) zumindest zwei, vorzugsweise mindestens vier, Hubzylinder (31) umfasst.

7. Auspackvorrichtung nach einem der vorstehenden Ansprüche, wobei die Aufbauplattform-Hubeinrichtung (40) zumindest einen Hubtisch (41) umfasst.

8. Auspackvorrichtung nach einem der vorstehenden Ansprüche, wobei die Übergabeöffnung (6) so ausgebildet ist, dass sie zur Trennwand (5) benachbarte Seitenwände einer Baubehälterwand (101) eines Baubehälters (100) ringsum umschließt, wenn sich der Baubehälter (100) in der Baubehälter-Auspackposition (P2) befindet.

9. Auspackvorrichtung nach einem der vorstehenden Ansprüche, wobei die Auspackvorrichtung (1) eine Rest-Pulverkammer (4), vorzugsweise unterhalb der Auspackkammer (3) und vorzugsweise neben der Aufnahmekammer (2), aufweist,
wobei die Rest-Pulverkammer (4) vorzugsweise eine Pulver-Aufnahmebox (60) und/oder eine Pulver-Abtransport-Einrichtung aufweist.

10. Auspackvorrichtung nach einem der vorstehenden Ansprüche, wobei die Auspacckammer (3) über eine Siebanordnung (7), bevorzugt einen Siebbereich (7) in und/oder unterhalb der Trennwand (5), mit der Rest-Pulverkammer (4) verbunden ist.

11. Auspackvorrichtung nach einem der vorstehenden Ansprüche, wobei die Auspackvorrichtung (1) eine Absaugeinrichtung (8) aufweist, um insbesondere Pulverstaub aus der Auspackkammer (3) abzusaugen.

12. Auspackvorrichtung nach Anspruch 11, wobei die Absaugeinrichtung (8) Absaug-Öffnungen (9) aufweist, welche sich bevorzugt oberhalb eines Auspackbereichs (AB) befinden.

13. Auspackvorrichtung nach Anspruch 12, wobei die Absaugeinrichtung (8) eine Mehrzahl, bevorzugt eine Vielzahl, an Absaug-Öffnungen (9) aufweist, welche entlang einer Haupterstreckung der Auspackvorrichtung (1), bevorzugt im Wesentlichen entlang der kompletten Haupterstreckung innerhalb der Auspackvorrichtung (1) verteilt sind.

14. Auspackvorrichtung nach einem der vorstehenden Ansprüche, wobei die Aufnahmekammer (3) Zentrierelemente (21, 22) aufweist, um einen in der Aufnahmekammer (3) aufgenommenen Baubehälter (100) auf der Baubehälter-Hubeinrichtung (30) zu positionieren.

15. Verfahren zur Steuerung einer Auspackvorrichtung (1) für einen Baubehälter (100) einer Vorrichtung zur additiven Fertigung von Fertigungsprodukten, welcher Baubehälter (100) eine umlaufende Baubehälterwand (101) und eine darin höhenverschiebbar gelagerte Aufbauplattform (102) aufweist, wobei die Auspackvorrichtung (1) eine Aufnahmekammer (2) zur Aufnahme eines Baubehälters (100), eine oberhalb der Aufnahmekammer (2) befindliche Auspackkammer (3) und eine Trennwand (5) zwischen der Aufnahmekammer (2) und der Auspackkammer (3) mit einer Übergabeöffnung (6) sowie eine Baubehälter-Hubeinrichtung (30) und eine Aufbauplattform-Hubeinrichtung (40) aufweist, wobei das Verfahren zumindest folgende Schritte umfasst:
- Aufnahme eines Baubehälters (100) in der Aufnahmekammer (3),
- Ausgabe von zumindest einem Steuersignal (AHS, AHS', BHS, BHS') an die Baubehälter-Hubeinrichtung (30) und an die Aufbauplattform-Hubeinrichtung (40), so dass der auf der Baubehälter-Hubeinrichtung (30) befindliche Baubehälter (100) von einer Baubehälter-Aufnahmeposition (P1) in eine Baubehälter-Auspackposition (P2) verfahren wird und automatisch zeitlich koordiniert die Aufbauplattform (102) des Baubehälters (100) mittels der Aufbauplattform-Hubeinrichtung (40) von einer Aufbauplattform-Aufnahmeposition (P3) in eine Aufbauplattform-Auspackposition (P4) verfahren wird.
